# EUROPÄISCHE PATENTSCHRIFT

(11) **EP 1 895 827 B1**
(45) Veröffentlichungstag und Bekanntmachung des Hinweises auf die Patenterteilung: **25.01.2012**
(21) Anmeldenummer: 07115259.9
(22) Anmeldetag: 30.08.2007
(51) Int. Cl.: H05K 7/20, H02B 1/56

(54) **Wärmeleitelement, Vorrichtung und System zur Belüftung einer elektrischen Funktionseinheit der Hoch- und Mittelspannung**
Heatconducting element, device and system for ventilating a high and medium voltage electric unit
Elément thermoconducteur, dispositif et système d'aération d'une unité fonctionnelle électrique de haute et moyenne tension

(30) Priorität: 04.09.2006 DE 102006041400
(43) Veröffentlichungstag der Anmeldung: 05.03.2008
(73) Patentinhaber: Ormazabal Anlagentechnik GmbH, 47804 Krefeld (DE)
(72) Erfinder: Achten, Klaus, 47807 Krefeld (DE); Plum, Jürgen, 52428 Jülich (DE); Domann, Gerd, 47441 Moers (DE); Kaulbars, Armin, 47877 Willich (DE)
(74) Vertreter: Cohausz & Florack

(56) Entgegenhaltungen:
- EP-A- 0 494 397
- DE-B3- 10 313 723
- DE-C1- 10 114 742
- DE-U1- 29 720 765
- JP-A- 2000 228 803

## Beschreibung

### EINLEITUNG

Die vorliegende Erfindung betrifft ein System zur Belüftung einer elektrischen Funktionseinheit der Hoch- und Mittelspannung, und ein Wärmeleitelement und eine Vorrichtung für ein System zur Belüftung einer elektrischen Funktionseinheit der Hoch- und Mittelspannung.

### STAND DER TECHNIK

Bei elektrischen Funktionseinheiten der Mittel- und Hochspannung, wie z.B. Schaltanlagen und begehbare Stationen, wird die entstandene Wärme von elektrischen Elementen, wie z.B. Leistungsschaltern, an die Luft eines Innenraums der Schaltanlage abgegeben und von dort nach außen geleitet.

EP 0 494 397 A2 offenbart ein System zur Belüftung einer Funktionseinheit der Mittelspannung.

Die immer kompakter werdende Bauweise von elektrischen Funktionseinheiten der Mittel- und Hochspannung erfordert größere Anforderungen an die thermische Isolation und die dielektrische Isolation von elektrischen Elementen innerhalb der elektrischen Funktionseinheit.

So weist das Platzieren von elektrischen Elementen innerhalb eines engen Raumes einer elektrischen Funktionseinheit, wobei die entstandene Wärme an die Luft des Raumes abgegeben wird, z.B. den Nachteil auf, dass z.B. bei einem Störfall eines der elektrischen Elemente benachbarte elektrische Elemente durch die bei dem Störfall entstandene Wärme beschädigt werden können. Auch im normalen Betrieb der elektrischen Funktionseinheit kann es aufgrund einer kompakten Bauweise zu einer nicht ausreichenden Wärmeabfuhr und einem daraus resultierenden Wärmestau kommen.

Des Weiteren zeigt sich der Nachteil, dass aufgrund der kompakten Bauweise kapazitive und/oder induktive Kopplungen zwischen den elektrischen Elementen auftreten können.

### BESCHREIBUNG DER ERFINDUNG

Der Erfindung liegt davon ausgehend die Aufgabe zugrunde, ein System zur Belüftung einer elektrischen Funktionseinheit der Hoch- und Mittelspannung mit verbesserter Wärmeabfuhr zu schaffen, wobei das System gleichzeitig zur dielektrischen Isolation von elektrischen Elementen geeignet ist.

Diese Aufgabe wird gelöst durch ein System zur Belüftung einer elektrischen Funktionseinheit der Hoch- und Mittelspannung, insbesondere Schaltanlagen der Hoch- und Mittelspannung nach Anspruch 1, wobei das System mindestens eine innerhalb der elektrischen Funktionseinheit verlaufenden natürliche geschlossene Wärmeleiteinrichtung umfasst, wobei die mindestens eine natürliche geschlossene Wärmeleiteinrichtung an mindestens eine nach außerhalb der elektrischen Funktionseinheit führenden Zuluftöffnung angeschlossen ist, und wobei in mindestens einer des mindestens einen natürlichen Wärmeleiteinrichtung mindestens ein elektrisches Element platziert ist.

Die elektrische Funktionseinheit kann beispielsweise eine Schaltanlage der Mittel- und/oder Hochspannung sein, oder eine Transformatoreinheit, oder eine sonstige Anlage der Mittel- und/oder Hochspannung darstellen, wobei die Funktionseinheit begehbar oder nicht begehbar sein kann.

Die mindestens eine natürliche Wärmeleiteinrichtung dient zur Ableitung von erwärmten Gasen an die Umgebung außerhalb der elektrischen Funktionseinheit, wobei die natürliche Wärmeleiteinrichtung keine aktiven Belüftungselemente wie z.B. Ventilatoren oder ähnliches verwendet. Beispielsweise kann die natürliche Wärmeleiteinrichtung den Effekt der Wärmekonvektion ausnutzen, wie z.B. bei einem Kamin, wobei z.B. mindestens eine der mindestens einen natürlichen Wärmeleiteinrichtung einen Kamin darstellen kann.

Das mindestens eine in der mindestens einen natürlichen Wärmeleiteinrichtung platzierte elektrische Element kann beispielsweise ein Leistungsschalter, oder ein Transformator, oder ein Wechselrichter, oder ein anderes elektrisches Element der Mittel- und/oder Hochspannung sein.

Mindestens eine der mindestens einen Wärmeleiteinrichtung kann beispielsweise derart gestaltet sein, dass sich ein in der mindestens einen Wärmeleiteinrichtung platziertes elektrisches Element aus der Wärmeleiteinrichtung herausnehmen lasst, z.B. durch eine Klappe in der Wärmeleiteinrichtung, so dass ein Austausch im Defektfall des einen elektrischen Elements einfach erfolgen kann.

Eine der mindestens einen natürlichen Wärmeleiteinrichtung kann beispielsweise mindestens einen Anschluss zum elektrischen Verbinden des mindestens einen in der mindestens einen natürlichen Wärmeleiteinrichtung platzierten elektrischen Elements an die elektrische Funktionseinheit aufweisen.

Die mindestens eine natürliche Wärmeleiteinrichtung dient als Wärmeleiteinrichtung für das mindestens eine elektrische Element. Das Material von mindestens einer der mindestens einen natürliche Wärmeleiteinrichtung kann aus einem thermischen Isolator bestehen, so dass die Abwärme eines mindestens einen in dieser mindestens einen natürlichen Wärmeleiteinrichtung platzierten elektrischen Elements nicht bzw. nur stark gedämpft durch Wände der mindestens einen natürliche Wärmeleiteinrichtung in die elektrische Funktionseinheit strahlen kann.

Somit können z.B. mehrere jeweils mindestens ein elektrisches Element beinhaltende natürliche Wärmeleiteinrichtungen in einem kleinen Raum einer elektrischen Funktionseinheit verlaufen, ohne dass die Wärmeabstrahlung eines des mindestens einen elektrischen Elements ein in einer benachbarten natürlichen Wärmeleiteinrichtung platziertes weiteres elektrisches Element beeinflusst.

Des Weiteren kann zumindest ein Bereich der mindestens einen natürlichen Wärmeleiteinrichtung, in dem mindestens ein elektrisches Element platziert ist, dielektrisch isoliert sein, so dass eine Störung durch induktive und/oder kapazitive Kopplung auf andere elektrische Elemente verhindert bzw. vermindert wird.

Ferner kann die mindestens eine natürliche Wärmeleiteinrichtung aus einem Material bestehen, welches bei Störfall des mindestes einen elektrischen Elements innerhalb der mindestens einen natürlichen Wärmeleiteinrichtung nicht zerstört wird bzw. für eine vorbestimmte Zeit widerstandsfähig ist. Somit kann die mindestens eine natürliche Wärmeleiteinrichtung Störsicherheit gewährleisten, in dem weitere in der Umgebung der mindestens einen natürlichen Wärmeleiteinrichtung platzierten elektrische Elemente vor Auswirkungen eines Störfalls des in der mindestens einen natürliche Wärmeleiteinrichtung platzierten elektrischen Element geschützt sind. Die entstandene Hitze bei solch einem Störfall kann durch die mindestens eine natürliche Wärmeleiteinrichtung abgeführt werden.

Die mindestens eine natürliche Wärmeleiteinrichtung kann somit eine geschlossene Wärmeleiteinrichtung innerhalb der elektrischen Funktionseinheit darstellen, wobei sich das mindestens eine elektrische Element eingekapselt in dieser geschlossenen Wärmeleiteinrichtung befindet.

Der Begriff geschlossen ist so zu verstehen, dass eine geschlossene Wärmeleiteinrichtung durchaus eine oder mehrere Öffnungen zum Ansaugen von Luft aufweisen kann.

Somit erlaubt die System zur Belüftung einer elektrischen Funktionseinheit der Hoch- und Mittelspannung ein Platzieren von einem oder mehreren elektrischen Elementen auf engen Raum, wie z.B. das Platzieren von mehreren Leistungsschaltern in jeweils einer gesonderten natürlichen Wärmeleiteinrichtung in einem Schaltraum einer Schaltanlage, wobei die Wärme des mindestens einen elektrischen Elements durch mindestens einen natürliche Wärmeleiteinrichtung abgeleitet und an die Umgebung außerhalb der elektrische Funktionseinheit geführt werden kann, womit eine kompaktere Bauweise der elektrischen Funktionseinheit ermöglicht werden kann.

Eine Ausgestaltung der Erfindung sieht vor, dass mindestens eine der mindestens einen natürlichen Wärmeleiteinrichtung mindestens eine Ansaugöffnung innerhalb der elektrischen Anlage aufweist.

Durch diese mindestens eine Ansaugöffnung kann die mindestens eine der mindestens einen natürlichen Wärmeleiteinrichtung z.B. auch Abwärme aus der elektrischen Funktionseinheit, wie z.B. einem Raum innerhalb der elektrischen Funktionseinheit, absaugen und an die äußere Umgebung der elektrischen Funktionseinheit abführen.

Eine Ausgestaltung der Erfindung sieht vor, dass sich mindestens ein weiteres elektrisches Element in der Nähe von mindestens einer der mindestens einen Ansaugöffnung befindet.

Somit kann die von dem mindestens einen weiteren elektrischen Element erhitzte Luft durch die mindestens eine der mindestens einen Ansaugöffnung abgesaugt und abgeführt werden. Beispielsweise kann dieses mindestens eine weitere elektrische Element eine Sammelschiene darstellen, oder ein anderes elektrisches Element, das sich beispielsweise von der Geometrie schlecht in einem des mindestens einen Abluftkanals platzieren lässt, oder das beispielsweise nur geringe Abwärme verursacht.

Somit kann die Gesamtwärmebilanz der elektrischen Funktionseinheit optimiert werden.

Eine Ausgestaltung der Erfindung sieht vor, dass die mindestens eine Zuluftöffnung mit mindestens einem Rückschlagverhinderungselement versehen ist.

Das mindestens eine Rückschlagventil kann beispielsweise verhindern, dass ein plötzlich auftretender Überdruck in mindestens einer der mindestens einen natürlichen Wärmeleiteinrichtung, der z.B. durch einen Störfall eines des mindestens einen elektrischen Elements verursacht werden kann, durch die mindestens eine Zuluftöffnung an die Umgebung außerhalb der elektrischen Funktionseinheit abgeleitet wird. Somit kann z.B. die Gefährdung von sich in einem Bereich der mindestens einen Zuluftöffnung aufhaltenden Personen vermieden werden.

Eine Ausgestaltung der Erfindung sieht vor, dass das mindestens eine Rückschlagverhinderungselement mindestens eine Rückschlagklappe darstellt.

Eine Ausgestaltung der Erfindung sieht vor, dass die mindestens eine natürliche Wärmeleiteinrichtung in mindestens eine Abluftvorrichtung mündet, wobei die mindestens eine Abluftvorrichtung die von der mindestens einen natürlichen Wärmeleiteinrichtung geleitete Luft außerhalb die elektrische Funktionseinheit leitet.

Diese mindestens eine Abluftvorrichtung kann beispielsweise auf einer Oberseite der elektrischen Funktionseinheit platziert sein, so dass die mindestens eine weitere Abluftvorrichtung als mindestens ein weiteres Wärmeleitelement dient, und hierbei als Kamin wirkt, und somit für einen guten Abzug der Luft aus der mindestens einen natürlichen Wärmeleiteinrichtung sorgt.

Es kann beispielsweise eine einzige Abluftvorrichtung für alle der mindestens einen natürlichen Wärmeleiteinrichtung verwendet werden, oder jeweils eine separate Abluftvorrichtung für jede der mindestens eine natürliche Wärmeleiteinrichtung, oder es kann auch eine Abluftvorrichtung für alle natürliche Wärmeleiteinrichtungen innerhalb eines Raums der elektrischen Funktionseinheit verwendet werden, oder jede andere sinnvolle Kombination.

Eine Ausgestaltung der Erfindung sieht vor, dass mindestens eine der mindestens einen Abluftvorrichtung mindestens einen ersten Abströmweg und mindestens einen zweiten Abströmweg umfasst, wobei der mindestens eine erste Abströmweg durch mindestens ein Verschlusselement verschließbar ist, und der mindestens eine zweite Abströmweg mindestens ein Absorberelement zur Absorption und Dämpfung heißer Gase umfasst, und wobei das mindestens eine Verschlusselement bei Überschreiten mindestens einen vorbestimmten druckabhängigen Schwellwertes den mindestens einen ersten Abströmweg verschließt.

Der mindestens eine erste Abströmweg kann beispielsweise Gase wie z.B. Luft direkt aus mindestens einer der mindestens einen natürlichen Wärmeleiteinrichtung ableiten. Der mindestens eine erste Abströmweg kann hierzu als Kamin ausgebildet sein. So kann der mindestens eine erste Abströmweg beispielsweise die Abwärme, welche durch Komponenten der elektrischen Funktionseinheit, wie z.B. Leistungsschalter, Wechselrichter, Sammelschienen, Transformator, oder andere Komponenten der Mittel- und/oder Hochspannungselektrik, im normalen Betrieb der elektrischen Funktionseinheit verursacht wird, aus der elektrischen Funktionseinheit absaugen und an die Umgebung außerhalb der elektrischen Funktionseinheit abführen.

Hierzu ist das mindestens eine Verschlusselement geöffnet, wenn der vorbestimmte druckabhängige Schwellwert nicht überschritten wird, wie es beispielsweise während des normalen Betriebs der elektrischen Funktionseinheit, d.h. wenn z.B. keine erhebliche Störung in der elektrischen Funktionseinheit vorliegt, der Fall ist, so dass die im normalen Betrieb generierte Abwärme durch den mindestens einen ersten Abströmweg abgeführt wird. Der mindestens eine erste Abströmweg kann beispielsweise einen geringen Strömungswiderstand aufweisen, so dass der z.B. als Kamin ausgebildete mindestens eine erste Abströmweg durch die Wärmekonvektion das Absaugen der Gase gewährleistet.
Das mindestens eine Verschlusselement kann vor dem mindestens einem ersten Abströmweg platziert sein, oder innerhalb des mindestens einen ersten Abströmwegs platziert sein.

Der druckabhängige Schwellwert kann beispielsweise derart vorbestimmt werden, dass dieser ein Maß für einen Überdruck eines Gases innerhalb des System zur Belüftung der elektrischen Funktionseinheit oder innerhalb der elektrischen Funktionseinheit oder innerhalb mindestens einer der mindestens einen natürlichen Wärmeleiteinrichtung darstellt, so dass durch das Verschließen des mindestens einen ersten Abströmwegs durch das mindestens eine Verschlusselement verhindert werden kann, dass Gas mit einem Überdruck durch den mindestens einen ersten Abströmweg außerhalb der elektrischen Funktionseinheit geleitet wird und dort beispielsweise eine Gefährdung, z.B. für sich in der Nähe einer Austrittsöffnung von mindestens einem des mindestens einen ersten Abströmwegs befindenden Person, darstellt.

Solch ein Überdruck könnte beispielsweise durch eine Störung innerhalb der elektrischen Funktionseinheit, wie z.B. durch Lichtbogen beim Schalten eines Leistungsschalters oder einem Durchbrennen eines Wechselrichters, verursacht werden. Bei einer Störung innerhalb der elektrischen Funktionseinheit, wie z.B. bei einer Störung eines des mindestens einen in einer der mindestens einen natürlichen Wärmeleiteinrichtung platzierten elektrischen Elements, können beispielsweise heiße Gase mit hohem Druck entstehen, welche bei Ableitung durch einen des mindestens einen Abströmwegs eine Gefährdung für die Umgebung außerhalb der elektrischen Funktionseinheit darstellen können.

Der vorbestimmte druckabhängige Schwellwert kann beispielsweise einen absoluten Druckwert oder eine Druckdifferenz darstellen.

So kann beispielsweise eine Druckdifferenz des Gases vor dem mindestens einen Verschlusselements und des Gases hinter dem mindestens einen Verschlusselements ermittelt werden, so dass wenn diese ermittelte Druckdifferenz einen vorbestimmten Druckdifferenzwert, d.h. den druckabhängigen Schwellwert, überschreitet, das mindestens eine Verschlusselement den mindestens einen ersten Abströmweg verschließt. Dieses Ermitteln der Druckdifferenz kann beispielsweise durch Sensoren erfolgen, wobei z.B. eine Steuerung oder Regelung im Falle des Überschreitens des vorbestimmten Druckdifferenzwertes das mindestens eine Verschlusselement verschließt. Das Ermitteln der Druckdifferenz und das Verschließen des mindestens einen ersten Verschlusselements bei Überschreiten des vorbestimmten Druckdifferenzwertes kann jedoch auch von dem mindestens einen ersten Verschlusselement selbst erfolgen. Beispielsweise kann das mindestens eine erste Verschlusselement rein mechanisch bzw. aerodynamisch durch eine Druckdifferenz zwischen dem auf das mindestens eine erste Verschlusselement anströmende Gas und dem hinter dem Verschlusselement abströmenden Gas verschließbar sein, wenn diese Druckdifferenz den Druckdifferenzwert überschreitet, so dass in diesem Fall die durch die Druckdifferenz auf das mindestens eine erste Verschlusselement einwirkende Kraft das mindestes eine erste Verschlusselement verschließt. Das mindestens eine erste Verschlusselement kann z.B. mindestens ein gelagertes Schwenkelement, wie z.B. eine Klappe darstellen, welche bei Überschreiten des Druckdifferenzwertes durch die auf die Klappe einwirkende Kraft den mindestens einen ersten Abströmweg schließt, oder mindestens eine federnd aufgehängte Platte, welche bei Überschreiten des Druckdifferenzwertes durch die auf die Platte einwirkende Kraft die Federn soweit zusammendrückt, dass der mindestens eine erste Anströmweg verschlossen wird, oder mindestens ein Ventil. Diese verschiedenen Verschlusselemente können auch frei miteinander kombiniert werden.

Es können auch z.B. mehrere vorbestimmte druckabhängige Schwellwerte zur Auslösung der mindestens einen Verschlusselements betrachtet werden, wobei das mindestens eine erste Verschlusselement den mindestens einen ersten Abströmweg verschließt, wenn mindestens einer der mehreren vorbestimmten druckabhängigen Schwellwerte überschreite. Diese mehreren vorbestimmten druckabhängigen Schwellwerte können eine frei wählbare Kombination aus den zuvor beschriebenen absoluten Druckwerten und den Druckdifferenz mit den dazu erläuterten Realisierungen sein.

Nachdem bei Überschreiten des einen vorbestimmten druckabhängigen Schwellwertes der mindestens eine erste Abströmweg durch das mindestens eine Verschlusselement verschlossen ist, strömt beispielsweise ein sich in der elektrischen Funktionseinheit durch eine Störung erzeugte heiße Gas mit hohem Druck in den mindestens zweiten Abströmweg, welches das mindestens eine Absorberelement zur Absorption oder Dämpfung heißer Gase umfasst. Dieses Absorberelement kann z.B. mindestens ein monolithischer Keramikkörper sein, welcher Kanäle zum Durchtritt von Gasen aufweist und eingeleitetem Gas Wärme entzieht und druckmindernd wirkt, so dass das durch diesen mindestens einen Absorberelement geführte Gas gekühlt und mit geringerem Druck an die Umgebung außerhalb der elektrischen Funktionseinheit abgeführt werden kann, ohne dort eine Gefährdung für die Umwelt und/oder Personen darzustellen.

Das mindestens eine Absorberelement kann beispielsweise in einer Baueinheit zur Aufnahme des mindestens einen Absorberelements platziert sein. Beispielsweise kann diese Baueinheit zur Aufnahme mindestens einen Absorberelements die in der deutschen Patentschrift DE 103 13 723 B3 offenbarte Baueinheit darstellen, und es kann das in dieser Patenschrift offenbarte mindestens eine Absorberelement verwendet werden, es kann jedoch auch jede andere geeignete Baueinheit zur Aufnahme eines mindestens einen geeigneten Absorberelements zur Dämpfung und Absorption von heißen Gasen verwendet werden. Des Weiteren kann beispielsweise mindestens eines dieses mindesten einen Absorberelement dazu ausgelegt sein, einen Störlichtbogen, welcher in den mindestens einen zweiten Abströmweg eindringt, für eine vorbestimmte Zeit zu absorbieren, damit eine Gefährdung von Personen durch ein Austreten des Störlichtbogens für diese vorbestimmte außerhalb der elektrischen Funktionseinheit vermieden werden kann. Diese vorbestimmte Zeit kann beispielsweise ca. 1 bis 3 Sekunden betragen, so dass innerhalb dieser vorbestimmten Zeit der Störlichtbogen, z.B. durch weiteres Abschalten, gelöscht werden kann. Die vorbestimmte Zeit kann jedoch auch kürzer oder länger ausgelegt sein, beispielsweise abhängig von Bedingungen der elektrischen Funktionseinheit.

Das mindestens eine Absorberelement kann auswechselbar in der Baueinheit zur Aufnahme des mindestens einen Absorberelements ausgebildet sein.

Diese Ausgestaltung der Erfindung zeigt den Vorteil, dass im normalen Betrieb der elektrischen Funktionseinheit erzeugte Wärme, wie z.B. Verlustwärme mindestens eines elektrischen Elements, durch den geöffneten ersten Abströmweg an die Umgebung außerhalb der elektrische Funktionseinheit abgeführt werden kann, z.B. durch Wärmekonvektion und/oder einen Kamineffekt, und somit eine Überhitzung der elektrischen Funktionseinheit während des normalen Betriebes vermieden werden kann.

Des Weiteren zeigt diese Ausgestaltung der Erfindung den Vorteil, dass beispielsweise im Falle einer Störung innerhalb der elektrischen Funktionseinheit, wie z.B. einer Störung eines elektrischen Elements in einer der mindestens einen natürlichen Wärmeleiteinrichtung, welche z.B. ein heißes Gas mit hohem Druck erzeugt, verhindert wird, dass dieses heiße Gas mit hohem Druck direkt an die Umgebung außerhalb der elektrischen Funktionseinheit abgeführt wird, und dort z.B. Personen gefährden würde, sondern zwangsweise durch das mindestens eine Absorberelement zur Absorption und Dampfung des heißen Gases geleitet wird, und somit das vormals heiße Gas abgekühlt und druckgemindert an die Umgebung abgegeben wird, so dass keine Gefährdung von sich dort eventuelle aufhaltenden Personen erfolgt.

Eine Ausgestaltung der Erfindung sieht vor, dass der druckabhängige Schwellwert derart vorbestimmt ist, dass das mindestens eine Verschlusselement im normalen Betrieb der elektrischen Funktionseinheit den mindestens einen ersten Abströmweg nicht verschließt, und dass bei störungsbedingten Druckanstieg das mindestens eine Verschlusselement den mindestens einen ersten Abströmweg verschließt.

Die Erfindung nach Anspruch 1 sieht vor, dass mindestens eine der mindestens einen natürlichen Wärmeleiteinrichtung mindestens drei Komponenten umfasst, wobei eine erste Komponente einen an die mindestens eine Zuluftöffnung angeschlossenen Zuluftkanal darstellt, und eine zweite Komponente ein mindestens eines des mindestens einen elektrischen Elements beinhaltendes erstes Wärmeleitelement darstellt, und eine dritte Komponente ein zweites Wärmeleitelement darstellt, und wobei das erste Wärmeleitelement bündig zwischen dem Zuluftkanal und dem zweiten Wärmeleitelement angeordnet ist.

So kann beispielsweise eine zweite Komponente, d.h. ein erste Wärmeleitelement, aus einem dielektrischen Isolator bestehen, welcher das mindestens eine in dem ersten Wärmeleitelement befindende elektrische Element dielektrisch isoliert und somit eine Störung von anderen sich außerhalb der zweiten Komponenten befindenden elektrischen Elemente verringert bzw. vermieden werden kann.

Ferner kann das erste Wärmeleitelement mindestens einen aus dem ersten Wärmeleitelement herausgeführten elektrischen Kontakt zum Anschluss des beinhalteten mindestens einen elektrischen Elements an die elektrische Funktionseinheit aufweisen.

Des Weiteren kann ein erstes Wärmeleitelement und/oder ein zweites Wärmeleitelement wärmeisoliert sein.

Das erste Wärmeleitelement kann ferner aus einem Material bestehen, welches bei einem Störfall des sich in dem ersten Wärmeleitelement befindenden mindestens einen elektrischen Element nicht zerstört wird bzw. für eine vorbestimmte Zeit widerstandsfähig ist. Somit kann das erste Wärmeleitelement Störsicherheit gewährleisten, in dem weitere in der Umgebung des ersten Wärmeleitelements platzierte elektrische Elemente vor den Auswirkungen eines Störfalls des in dem ersten Wärmeleitelement platzierten elektrischen Element geschützt sind. Die entstandene Hitze und/oder der entstandene Druck bei solch einem Störfall kann durch die mindestens eine natürliche Wärmeleiteinrichtung abgeführt werden. Auf der Zuluftschacht und das zweite Wärmeleitelement können aus solch einem Material bestehen.

Das erste Wärmeleitelement kann z.B. ein Polrohr eines Leistungsschalters darstellen, wobei das eine Ende des Polrohrs an den entsprechenden Zuluftkanal angeschlossen ist, und das andere Ende des Polrohrs an das entsprechende zweite Kaminsegment angeschlossen ist.

Der komponentenweise Aufbau ermöglich ferner das einfache Austauschen der einzelnen Komponenten innerhalb der elektrischen Funktionseinheit, z.B. für Wartungszwecke, oder Umbauten, oder bei einem Defekt eines in einem ersten Wärmeleitelement platzierten elektrischen Element das Austauschen dieses ersten Wärmeleitelements durch ein gleiches erstes Wärmeleitelement mit einem gleichwertigen, funktionsbereiten elektrischen Element.

Eine Ausgestaltung der Erfindung sieht vor, dass das erste Wärmeleitelement aus einem dielektrischen Material besteht.

Eine Ausgestaltung der Erfindung sieht vor, dass das erste Wärmeleitelement mindestens einen aus dem erstem Wärmeleitelement herausgeführten elektrischen Kontakt zum Anschluss des beinhalteten mindestens einen elektrischen Elements an die elektrische Funktionseinheit aufweist, und dass das erste Wärmeleitelement mindestens eine in der Nähe von mindestens einem des mindestens einen elektrischen Kontakts befindende Ansaugöffnung umfasst.

Der mindestens eine aus dem ersten Wärmeleitelement herausgeführte elektrische Kontakt kann das mindestens eine elektrische Element an die elektrische Funktionseinheit anschließen. Beispielsweise kann der mindestens eine elektrische Kontakt an eine Sammelschiene einer Mittel- und/oder Hochspannungsanlage angeschlossen werden.

Die mindestens eine in der Nähe des mindestens einen des mindestens einen elektrischen Kontakt befindende Ansaugöffnung kann beispielsweise die an diesem mindestens einen Kontakt entstandene Wärme absaugen und durch die natürliche Wärmeleiteinrichtung nach außen abführen.

Eine Ausgestaltung der Erfindung sieht vor, dass mindestens eine der mindestens einen Ansaugöffnung des ersten Wärmeleitelements über ein Rohr in die Nähe eines elektrischen Elements verlängert ist.

Somit kann das erste Wärmeleitelement auch Abwärme von elektrischen Elementen, welche sich außerhalb des ersten Wärmeleitelements und nicht in dessen unmittelbarer Nähe befinden, absaugen, wie z.B. die Abwärme von einer entfernt platzierten Sammelschiene oder eines anderen elektrischen Elements.

Des Weiteren kann beispielsweise das Rohr genutzt werden, um eine elektrische Verbindung von mindestens einem in dem ersten Wärmeleitelement platzierten elektrischen Elements durch das Rohr außerhalb des ersten Wärmeleitelements zu führen und am Ende des Rohres in mindestens einem elektrischen Kontakt zu enden, welcher zum Anschließen des mindestens einen elektrischen Elements an die elektrische Funktionseinheit dient. Somit kann das Rohr gleichzeitig zur Aufnahme einer Schiene zum Anschließen des mindestens einen elektrischen Elements und als Absaugelement zum Absaugen von Wärme an dem nach außen geführten mindestens einen elektrischen Kontakt dienen. Beispielsweise kann ein erstes Wärmeleitelement zwei Rohre mit jeweils einem nach außen geführtem Kontakt aufweisen, z.B. zum Anschluss eines sich in dem ersten Wärmeleitelement befindenden Leistungsschalter. Abhängig von dem in dem ersten Wärmeleitelement platzierten mindestens einem elektrischen Element kann das erste Wärmeleitelement auch weitere Rohre mit gleichzeitig nach außen geführten Kontakten aufweisen.

Eine Ausgestaltung der Erfindung sieht vor, dass das Rohr aus dielektrischem Material besteht.

Das Rohr kann weiterhin aus einem thermischen Isolator bestehen.

Eine Ausgestaltung der Erfindung sieht vor, dass das zweite Wärmeleitelement oberhalb des Zuluftkanals und des ersten Wärmeleitelements angeordnet ist.

Das zweite Wärmeleitelement kann somit zusammen mit dem ersten Wärmeleitelement einen Kamin darstellen. Beispielsweise kann das zweite Wärmeleitelement beispielsweise vertikal angeordnet sein kann, und auch das erste Wärmeleitelement kann beispielsweise vertikal angeordnet sein.

Durch die Wärmekonvektion kann somit das zweite Wärmeleitelement warme Luft bzw. warme Gase aus dem ersten Wärmeleitelement absaugen, und beispielsweise an eine der mindestens einen Abluftvorrichtung weitergeleitet werden.

Diese mindestens eine Abluftvorrichtung kann beispielsweise oberhalb des zweiten Wärmeleitelements platziert sein, so dass ein Kamineffekt durch die Abluftvorrichtung weiter verstärkt werden kann und somit z.B. das Absaugen der Wärme aus der elektrischen Funktionseinheit verbessert werden kann.

Eine Ausgestaltung der Erfindung sieht vor, dass das erste Wärmeleitelement als herausnehmbares Wärmeleitelement zwischen dem Zuluftkanal und dem zweiten Wärmeleitelement ausgebildet ist.

Dieses herausnehmbare Wärmeleitelement kann z.B. mit dem Zuluftkanal und dem zweiten Wärmeleitelement mit Schrauben verschraubbar sein, so dass nach Lösen der Schrauben das erste Wärmeleitelement herausgenommen werden kann. Es können auch andere Möglichkeiten der Fixierung des herausnehmbaren Wärmeleitelements zwischen dem Zuluftkanal und dem zweiten Wärmeleitelement verwendet werden, wie z.B. ein einrastender Schnappverschluss, oder ein Arretierungsmechanismus, der beispielsweise über einen Hebel gelöst bzw. arretiert werden kann, oder das herausnehmbare Wärmeleitelement kann als zwischen dem Zuluftschaft und dem zweiten Wärmeleitelement einschiebbares und herausschiebbares ersten Wärmeleitelement ausgebildet sein.

Das herausnehmbare Wärmeleitelement kann z.B. eine Rohrform aufweisen, wobei ein Ende des Rohrs mit einer Austrittsöffnung des Zuluftkanals verbindbar ist, und das andere Ende des Rohrs mit einer Eingangsöffnung des zweiten Wärmeleitelements verbindbar ist. Das zweite Wärmeleitelement kann beispielsweise auch eine Rohrform aufweisen, das zweite Wärmeleitelement kann jedoch auch als Schacht realisiert sein oder eine andere Form aufweisen.

Der Zuluftschaft und das zweite Wärmeleitelement können fest in der elektrischen Funktionseinheit installiert sein.

Das herausnehmbare Wärmeleitelement ermöglicht beispielsweise ein schnelles Austauschen des in dem herausnehmbaren Wärmeleitelement platzierten mindestens einen elektrischen Elements, z.B. im Schadensfall, in dem einfach das gesamte herausnehmbare Wärmeleitelement gegen ein anderes gleiches herausnehmbares Wärmeleitelement ausgetauscht werden kann. Somit können Ausfallzeiten der elektrischen Funktionseinheit verringert werden.

Eine Ausgestaltung der Erfindung sieht vor, dass das herausnehmbare Wärmeleitelement als zwischen dem Zuluftschacht und dem zweiten Wärmeleitelement einschiebbares und herausziehbares Modul ausgebildet ist.

Die elektrische Funktionseinheit kann beispielsweise Führungsmittel zum bündigen Einschieben und Herausziehen des Moduls zwischen dem Zuluftschacht und dem zweiten Wärmeleitelement aufweisen. Diese Führungsmittel können z.B. Schienen umfassen, wobei das Modul eine auf den Schienen bewegliche Einfahrkonsole umfassen kann, so dass die Einfahrkonsole mit dem Modul auf den Schienen zwischen das Zuluftschacht und dem zweitem Wärmeleitelement hineingeschoben und wieder herausgezogen werden kann. Auch andere Führungsmittel mit dementsprechenden Ausgestaltungen an dem Modul können realisiert werden.

Beispielsweise kann das Modul ein Polrohr eines Leistungsschalter darstellen, wobei an dem Polrohr eine Einfahrkonsole befestigt ist das Polrohr und die Einfahrkonsole einen Leistungsschaltereinschub bilden, der zwischen den Zuluftschacht und dem zweiten Wärmeleitelement einschiebbar und herausziehbar ist. Der Leistungsschaltereinschub kann beispielsweise weitere Zuluftöffnungen in der Einfahrkonsole direkt unter dem Polrohr aufweisen.

Das Modul kann beispielsweise auch mehrere Polrohre mit mehreren Leistungsschaltern umfassen.

Eine Ausgestaltung der Erfindung sieht vor, dass das zweite Wärmeleitelement Mittel zur Einpassung des einschiebbaren und herausziehbaren Moduls zwischen dem Zuluftschacht und dem zweiten Wärmeleitelement umfasst.

Diese Mittel zur Einpassung können beispielsweise beim Einschiebevorgang eine passgenaue Verbindung zwischen dem Modul und dem zweiten Wärmeleitelement herstellen, und gleichzeitig das eingeschobene Modul gegen den Zuluftschacht drücken, so dass auch dort eine bündige Verbindung hergestellt wird.

Ferner kann auch der Zuluftschacht Mittel zur Einpassung des einschiebbaren und herausziehbaren Moduls zwischen dem Zuluftschacht und dem zweiten Wärmeleitelement umfassen.

Eine Ausgestaltung der Erfindung sieht vor, dass das zweite Wärmeleitelement schwimmend gelagert ist und einen rampenförmigen Flansch aufweist, und dass das einschiebbare und herausziehbare Modul einen rampenförmigen Flansch zur Verbindung mit dem rampenförmigen Flansch des zweiten Wärmeleitelements aufweist.

So kann beim Einschieben des Moduls der rampenförmige Flansch des Moduls gegen den rampenförmigen Flansch des zweiten Wärmeleitelements drücken und hierbei das schwimmend gelagerte zweite Wärmeleitelement in der Lagerung bewegen, so dass die beiden Flansche nach dem Einschieben bündig aufeinander liegen.

Beispielsweise kann sich das zweite Wärmeleitelement oberhalb des eingeschobenen Moduls befinden, wie z.B. ein senkrecht nach oben verlaufendes Kaminrohr, und durch die schwimmende Lagerung beim Einschieben des Moduls leicht nach oben verschoben werden, so dass eine bündige Verbindung zwischen dem Flansch des Moduls und dem Flansch der zweiten Wärmeleitelements erzielt wird. Ferner kann das zweite Wärmeleitelement auf das eingeschobene Modul einen Druck ausüben und somit das eingeschobene Modul gegen den Zuluftschacht drücken, so dass auch dort eine bündige Verbindung gewährleistet werden kann.

Eine Ausgestaltung der Erfindung sieht vor, dass das herausnehmbare Wärmeleitelement mindestens einen aus dem herausnehmbaren Wärmeleitelement herausgeführten elektrischen Kontakt zum Anschluss des beinhalteten mindestens einen elektrischen Elements an die elektrische Funktionseinheit aufweist, und wobei der mindestens eine elektrische Kontakt bei eingebautem Zustand des herausnehmbaren Wärmeleitelements elektrischen Kontakt mit der elektrischen Funktionseinheit herstellt, und wobei dieser elektrische Kontakt bei Herausnehmen des herausnehmbaren Wärmeleitelements getrennt wird.

Für diesen mindestens einen elektrischen Kontakt gelten die zuvor genannten Erläuterungen über den mindestens einen elektrischen Kontakt des ersten Wärmeleitelements gleichermaßen.

Die elektrische Funktionseinheit kann beispielsweise für jeden des mindestens einen elektrischen Kontakt einen zugeordneten zweiten Kontakt aufweisen, wobei der zugeordnete zweite Kontakt automatisch Kontakt mit dem entsprechenden Kontakt des herausnehmbaren Wärmeleitelements herstellt, wenn sich das herausnehmbare Wärmeleitelement zwischen dem Zuluftschacht und dem zweiten Kaminselement befindet.

Ist beispielsweise das herausnehmbare Wärmeleitelement als einschiebbares und herausziehbares Modul ausgebildet, so kann jeder der zugeordneten zweiten Kontakte so ausgebildet sein, dass diese beim Einschieben des Moduls die jeweils zugeordneten Kontakte des Moduls aufnehmen und somit eine Verbindung des mindestens einen elektrischen Elements in dem Modul mit der elektrischen Funktionseinheit hergestellt wird. Diese Verbindung wird beim Herausziehen des Moduls automatisch getrennt.

Somit muss bei einem Austauschen des herausnehmbaren Wärmeleitelements die Verkabelung nicht separat abgetrennt und neu angeschlossen werden, womit sich z.B.

Ausfallzeiten der elektrischen Funktionseinheit verringern lassen.

Eine Ausgestaltung der Erfindung sieht vor, dass das herausnehmbare Wärmeleitelement mindestens eine in der Nähe von mindestens einem des mindestens einen elektrischen Kontakts befindende Ansaugöffnung umfasst.

Somit kann das eingebaute herausnehmbare Wärmeleitelement entstandene Abwärme an dem mindestens einen des mindestens einen elektrischen Kontakts durch die sich in der Nähe befindende mindestens eine Ansaugöffnung absaugen, und dadurch beispielsweise eine Aufheizung der elektrischen Funktionseinheit verringern bzw. verhindern.

Eine Ausgestaltung der Erfindung sieht vor, dass das mindestens eine der mindestens einen Ansaugöffnung des herausnehmbaren Wärmeleitelements über ein Rohr in die Nähe von mindestens einem des mindestens einen elektrischen Kontakts verlängert ist.

Somit kann der Anschluss des mindestens einen elektrischen Kontakts auch eine größere räumliche Distanz zum herausnehmbaren Wärmeleitelement aufweisen, wie es z.B. der Fall sein kann, wenn der mindestens eine elektrische Kontakt an mindestens einen zugeordneten elektrischen Kontakt an einer Sammelschiene anzuschließen ist, und sich die Sammelschiene in einer gewissen Entfernung zum herausnehmbaren Wärmeleitelement befindet. Somit kann auch über diese größere räumliche Distanz die Abwärme an dem mindestens einen elektrischen Kontakt abgesogen werden und durch die natürliche Wärmeleiteinrichtung abgeleitet werden.

Eine Ausgestaltung der Erfindung sieht vor, dass mindestens einer des mindestens einen elektrischen Kontakts durch mindestens eine der mindestens einen durch ein Rohr verlängerten Ansaugöffnung aus dem herausnehmbaren Wärmeleitelement herausgeführt ist.

Somit kann das Rohr neben einer Wärmeabsaugfunktion beispielsweise gleichzeitig für jeden des durch das Rohr nach außen geführten elektrischen Kontakts die elektrische Verbindung, wie z.B. ein Kabel, zu dem mindestens einen in dem herausnehmbaren Wärmeleitelement befindenden elektrischen Element in dem Rohr selbst aufnehmen.

Somit kann das Rohr neben einer wärmeabsaugenden Funktion auch als Halterelement für den mindestens einen nach außen geführten Kontakt dienen.

Eine Ausgestaltung der Erfindung sieht vor, dass das Rohr aus dielektrischem Material besteht.

Das dielektrische Material kann z.B. Störungen, wie. beispielsweise Überschläge zu anderen Leitungen, Kontakten, etc., verhindern.

Des Weiteren kann das dielektrische Material auch thermische Isolsationseigenschaften aufweisen.

Eine Ausgestaltung der Erfindung sieht vor, dass mindestens eines des mindestens einen elektrischen Elements ein Wechselrichter für Mittelspannung und/oder Hochspannung ist.

Eine Ausgestaltung der Erfindung sieht vor, dass mindestens eines des mindestens einen elektrischen Elements ein Transformator für Mittelspannung und/oder Hochspannung ist.

Eine Ausgestaltung der Erfindung sieht vor, dass mindestens eines des mindestens einen elektrischen Elements ein Leistungsschalter für Mittelspannung und/oder Hochspannung ist.

Eine Ausgestaltung der Erfindung sieht vor, dass die elektrische Funktionseinheit eine Schaltanlage für Mittelspannung und/oder Hochspannung darstellt.

Die Schaltanlage kann beispielsweise begehbar oder nicht begehbar sein, und kann einen oder mehrere Schalträume umfassen.

Eine Ausgestaltung der Erfindung sieht vor, dass die Schaltanlage luftisoliert ist.

Eine Ausgestaltung der Erfindung sieht vor, dass die Schaltanlage gasisoliert ist.

Des Weiteren kann die Schaltanlage beispielsweise auch mit einem flüssigen Medium isoliert sein.

Die Schaltanlage kann z.B. SF6 gasisoliert sein, es können jedoch auch andere geeignete Gase zur Isolierung verwendet werden.

Das erfindungsgemäße System weist den weiteren Vorteil auf, dass sie zur Nachrüstung von elektrischen Funktionseinheiten verwendet werden kann.

Die Aufgabe kann des Weiteren gelöst werden durch ein Wärmeleitelement für ein System zur Belüftung einer elektrischen Funktionseinheit der Hoch- und Mittelspannung, wobei das System mindestens einen an mindestens eine Zuluftöffnung angeschlossenen Zuluftkanal umfasst, und wobei das System mindestens ein zweites Wärmeleitelement umfasst; wobei in dem Wärmeleitelement für das System mindestens ein elektrisches Element platziert ist, und das Wärmeleitelement zwischen einem ersten des mindestens einen Zuluftkanals und einem ersten des mindestens einen zweiten Wärmeleitelements bündig platzierbar ist, so dass der erste des mindestens einen Zuluftkanals, das platzierte Wärmeleitelement, und das erste des mindestens einen zweiten Wärmeleitelements eine innerhalb der elektrischen Funktionseinheit verlaufende geschlossene natürliche Wärmeleiteinrichtung bilden.

Für dieses Wärmeleitelement für das System zur Belüftung einer elektrischen Funktionseinheit der Hoch- und Mittelspannung gelten gleichermaßen die zuvor genannten Erläuterungen und Ausführungen bezüglich des zuvor genannten ersten Wärmeleitelements, des Weiteren gelten auch sämtliche zuvor genannten Erläuterungen und Ausführungen zum System zur Belüftung einer elektrischen Funktionseinheit der Hoch- und Mittelspannung.

Die Aufgabe kann des Weiteren gelöst werden durch eine Vorrichtung für ein System zur Belüftung einer elektrischen Funktionseinheit der Hoch- und Mittelspannung wobei die Vorrichtung mindestens einen an mindestens eine Zuluftöffnung angeschlossenen Zuluftkanal umfasst, und wobei die Vorrichtung mindestens ein Wärmeleitelement umfasst; und wobei mindestens ein erster des mindestens einen Zuluftkanals und mindestens ein erstes des mindestens einen Wärmeleitelements derart ausgebildet sind, dass zwischen dem ersten des mindestens einen Zuluftkanals und dem ersten des mindestens einen Wärmeleitelements ein weiteres mindestens ein elektrisches Element umfassendes Wärmeleitelement bündig platzierbar ist, so dass der erste des mindestens einen Zuluftkanals, das platzierte weitere Wärmeleitelement, und das erste des mindestens einen Wärmeleitelements eine innerhalb der elektrischen Funktionseinheit verlaufende geschlossene natürliche Wärmeleiteinrichtung bilden.

Für die Komponenten der Vorrichtung, d.h. für den mindestens einen an mindestens eine Zuluftöffnung angeschlossenen Zuluftkanal und das mindestens eine Wärmeleitelement umfasst gelten die zuvor genannten Erläuterungen und Ausführungen gleichermaßen, wobei das mindestens eine Wärmeleitelement dem vorherigen zweiten Wärmeleitelement entspricht, und das platzierbare weitere Wärmelement dem vorherigen ersten Wärmeleitelement entspricht. Des Weiteren gelten auch sämtliche zuvor genannten Erläuterungen und Ausführungen zum System zur Belüftung einer elektrischen Funktionseinheit der Hoch- und Mittelspannung.

### KURZE BESCHREIBUNG DER FIGUREN

Die Erfindung wird im Folgenden anhand von exemplarischen Ausführungsformen zeigenden Zeichnungen näher erläutert.

Dabei zeigen:
- Fig. 1a:: Eine schematische Darstellung einer ersten Ausführungsform des erfindungsgemäßen Systems;
- Fig. 1b:: Eine schematische Darstellung einer zweiten Ausführungsform des erfindungsgemäßen Systems;
- Fig. 2:: Eine schematische Darstellung einer dritten Ausführungsform des erfindungsgemäßen Systems;
- Fig. 3:: Eine schematische Darstellung einer Ausführungsform einer erfindungsgemäßen Vorrichtung und einer Ausführungsform eines erfindungsgemäßen Wärmeleitelements für ein System zur Belüftung einer elektrischen Funktionseinheit;
- Fig. 4:: Eine schematische Darstellung einer vierten Ausführungsform des erfindungsgemäßen Systems;
- Fig. 5a,5b:: Eine schematische Darstellung einer ersten exemplarischen Abluftvorrichtung des erfindungsgemäßen Systems; und
- Fig. 6a,6b:: Eine schematische Darstellung einer zweiten exemplarischen Abluftvorrichtung des erfindungsgemäßen Systems.

Sämtliche in der Beschreibung genannten Erläuterungen und Vorteile, wie z.B. zu den verschiedenen Ausgestaltungen der Erfindung, gelten auch für die in den Figuren gezeigten Ausführungsformen.

Bei allen Figuren werden gleichartige Elemente mit den gleichen Bezugszeichen versehen, daher gelten die Erläuterungen wie Ausgestaltungen oder Vorteile über Elemente in einer Ausführungsform auch gleichermaßen für gleichartige Elemente in den anderen Ausführungsformen.

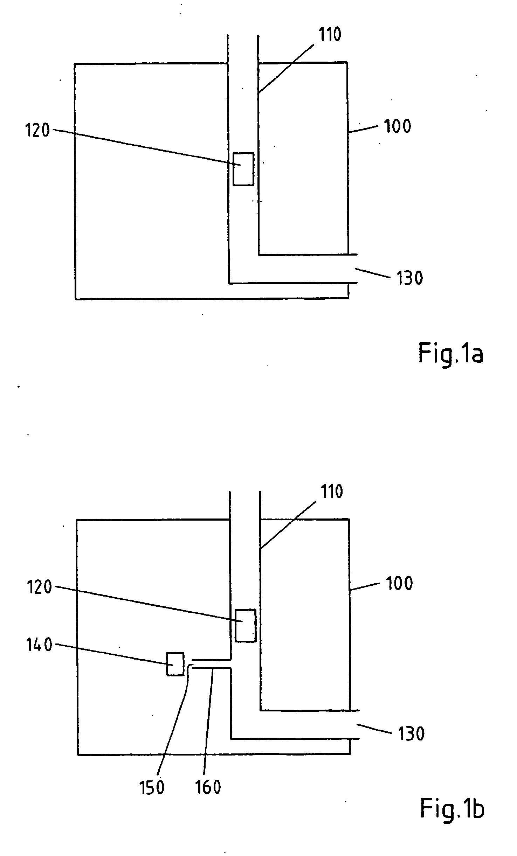

Figur 1 zeigt schematisch eine erste Ausführungsform des erfindungsgemäßen Systems zur Belüftung einer elektrischen Funktionseinheit der Hoch- und Mittelspannung 100.

Die elektrische Funktionseinheit 100 kann beispielsweise eine Schaltanlage sein, oder eine Transformatoreneinheit oder eine sonstige Anlage der Mittel- und/oder Hochspannung darstellen, wobei die Funktionseinheit 100 begehbar oder nicht begehbar sein kann.

Das System umfasst mindestens eine natürliche Wärmeleiteinrichtung 110, welches an mindestens eine Zuluftöffnung 130 angeschlossen ist, und wobei in der mindestens einen natürlichen Wärmeleiteinrichtung 110 mindestens ein elektrisches Element 120 platziert ist.

Das mindestens eine elektrische Element 120 kann beispielsweise ein Leistungsschalter sein, oder ein Transformator, oder ein Wechselrichter, oder ein anderes elektrisches Element der Mittel- und/oder Hochspannung. Des Weiteren kann das mindestens eine elektrische Element 120 durch die Wärmeleiteinrichtung 110 hindurch weitere elektrische Elemente, wie z.B. eine Sammelschiene, der elektrischen Funktionseinheit angeschlossen bzw. anschließbar sein (in Fig. 1a und 1b nicht dargestellt).

In der Figur 1a ist nur eine natürliche Wärmeleiteinrichtung 110 mit nur einem elektrischen Element 120 dargestellt, es können jedoch in einer Funktionseinheit 100 auch mehrere natürliche Wärmeleiteinrichtungen verlaufen. Ferner kann das System auch mehrere Zuluftöffnungen 130 aufweisen.
Die mindestens eine natürliche Wärmeleiteinrichtung 110 kann beispielsweise den Kamineffekt ausnutzen, um die von dem mindestens einen elektrischen Element 120 verursachte Wärme aus der elektrischen Funktionseinheit herauszuleiten, wobei von der mindestens einen Zuluftöffnung 130 kühle Außenluft angesaugt wird und die durch das mindestens eine elektrische Element 120 erwärmte Luft durch die Wärmekonvektion durch die natürliche Wärmeleiteinrichtung 110 außerhalb die elektrische Funktionseinheit 100 geleitet wird. Hierzu kann eine Ausgangsöffnung der mindestens einen natürlichen Wärmeleiteinrichtung auf der Oberseite der elektrischen Funktionseinheit 110 befinden, wie in Fig. 1a gezeigt, oder an einer Seitenwand der elektrischen Funktionseinheit 100 angebracht sein.

Die Wärmeleiteinrichtung kann thermisch isoliert sein, so dass die von dem mindestens einem elektrischen Element 120 erzeugte Abwärme nicht oder nur sehr gering in den Raum der elektrischen Funktionseinheit dringen kann.

Somit kann die in Fig. 1a gezeigte exemplarische erste Ausführungsform des erfindungsgemäßen Systems die Wärmeabfuhr einer elektrischen Funktionseinheit 100 verbessern, da die vom mindestens einen elektrischen Element 120 erzeugte Wärme direkt durch die natürliche Wärmeleiteinrichtung 110 an die Umgebung außerhalb der Funktionseinheit ableitet wird und eine Aufheizung eines Raums innerhalb der elektrischen Funktionseinheit verringert bzw. vermieden wird. Gleichzeitig kann die Wärmeleiteinrichtung als dielektrischer Isolator wirken.

Die Figur 1b zeigt eine zweite Ausführungsform des erfindungsgemäßen Systems.

Die mindestens eine Wärmeleiteinrichtung 110 weist mindestens eine Ansaugöffnung 150 auf, welche über ein Rohr 160 aus der Wärmeleiteinrichtung 110 heraus verlängert ist, so dass Abwärme von dem mindestens einem weiteren elektrischen Element 140 abgesogen werden kann und durch die Wärmeleiteinrichtung 110 an die Umgebung außerhalb der elektrischen Funktionseinheit abgegeben werden kann. Die elektrische Funktionseinheit 100 kann mindestens eine weitere Zuluftöffnung aufweisen (nicht in Fig. 1b gezeigt), so dass beim Absaugen durch die mindestens eine Ansaugöffnung 150 durch diese mindestens eine weitere Zuluftöffnung Luft in die elektrische Funktionseinheit 100 nachströmen kann.

Somit kann Abwärme von sich in der elektrischen Funktionseinheit 100 befindenden elektrischen Elementen 140, welche nicht in einer der Wärmeleiteinrichtungen 110 platziert sind, durch die mindestens eine Wärmeleiteinrichtung angesogen und abgeleitet werden.

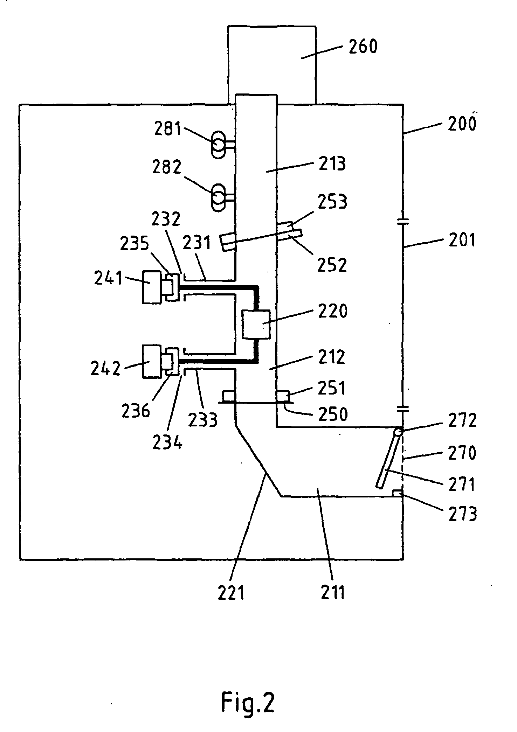

Figur 2 zeigt eine dritte Ausführungsform des erfindungsgemäßen Systems zur Belüftung einer elektrischen Funktionseinheit der Mittel- und Hochspannung 200.

Die in Figur 2 gezeigte natürliche Wärmeleiteinrichtung umfasst drei Komponenten: Einen an eine Zuluftöffnung 270 angeschlossenen Zuluftkanal 211, ein mindestens ein elektrisches Element 220 beinhaltendes erstes Wärmeleitelement 212, und ein zweites Wärmeleitelement 213. Das zweite Wärmeleitelement ist an eine Abluftvorrichtung 260 zur Abgabe von Gasen an die Umgebung außerhalb der elektrischen Funktionseinheit 200 angeschlossen, wobei sich die Abluftvorrichtung 260 auf der elektrischen Funktionseinheit 200 befindet, die Abluftvorrichtung 260 kann jedoch auch an einer Seitenwand der elektrischen Funktionseinheit 200 angebracht sein. Das erste Wärmeleitelement kann beispielsweise rohrförmig sein, und auch das zweite Wärmeleitelement kann beispielsweise rohrförmig sein. Der Zuluftkanal 211 kann beispielsweise Luftleitbleche 221 zur Lenkung eines Luftstromes hin zum ersten Wärmeleitelement 212 umfassen.

Die die drei Komponenten 211, 212, 213 umfassende Wärmeleiteinrichtung kann als Kamin ausgebildet sein, so dass durch die Zuluftöffnung 270 Luft angesaugt wird, diese angesaugte Luft von mindestens einem ersten elektrischen Element 220 in dem ersten Wärmeleitelement 212 erhitzt wird und durch die Wärmekonvektion durch das zweite Wärmeleitelement 213 über die Abluftvorrichtung nach außen abgeleitet wird. So kann das zweite Wärmeleitelement vertikal in der elektrischen Funktionseinheit 200 und oberhalb der ersten Wärmeleiteinrichtung 212 eingebaut sein, so dass ein guter Kamineffekt erzielt wird. Die Zuluftöffnung 270 kann ferner ein Gitter aufweisen, wie z.B. ein stochersicheres Gitter.

Das erste Wärmeleitelement kann des Weiteren zwei Rohre 231, 233, umfassen, welche zum einem jeweils einen Kontakt 234, 235 zur Kontaktierung des mindestens einen elektrischen Elements 220 an zwei elektrische Kontakte 241, 242 der elektrischen Funktionseinheit 200 aus der ersten Wärmeleiteinrichtung herausführen, und wobei die zwei Röhren 231, 233 zum anderen jeweils eine Ansaugöffnung 232, 234 zum Absaugen von Luft aufweisen, so dass an den Kontakten 234, 235, 241, 242 entstandene Wärme durch die beiden Rohre 231, 233 abgeleitet und durch die natürliche Wärmeleiteinrichtung und die Abluftvorrichtung 260 aus der elektrischen Funktionseinheit abgeleitet werden kann. Somit wird die Aufheizung des Raums der elektrischen Funktionseinheit 200, in dem sich die Kontakte 234, 235, 241, 242 befinden, verringert. Die Anzahl der Rohre und der Kontakte hängt von dem mindestens einem in dem ersten Wärmeleitelement 212 platzierten elektrischen Element 220 ab und kann selbstverständlich von der Anzahl zwei abweichen.

Das Material der ersten Wärmeleitelements 212 kann aus dielektrisch isolierendem Material sein. Somit können beispielsweise mehrere der in Fig. 2 dargestellten natürlichen Wärmeleiteinrichtung in einem Raum einer elektrischen Funktionseinheit 200 auch auf engem Raum platziert werden, ohne das sich die in den Wärmeleiteinrichtungen platzierten elektrischen Elementen 220 gegeneinander elektrisch stören. Ferner wird auch die Störung von anderen in der elektrischen Funktionseinheit 200 platzierten elektrischen Elementen verringert bzw. vermieden. Somit können beispielsweise mehrere elektrische Elemente 120, 220 in mehreren natürlichen Wärmeleiteinrichtungen 110, 212 platziert werden, voneinander wärmeisoliert und dielektrisch isoliert, so dass sich mehrere elektrische Elemente auf engen Raum einer elektrischen Funktionseinheit 100, 200 unterbringen lassen.

Des Weiteren kann das Material des ersten Wärmeleitelements 212 und des zweiten Wärmeleitelements 213 aus thermisch isolierendem Material sein, wobei das Material der ersten Wärmeleitelements 212 gleichzeitig auch dielektrisch isolierend sein kann. Somit wird die Wärmeabstrahlung in die elektrische Funktionseinheit 200 verringert.

Ferner kann das Material der natürlichen Wärmeleiteinrichtung, d.h. das Material der drei Komponenten 211, 212, 213 resistengroße Hitze und hohen Druck sein bzw. für eine vorbestimmte Zeit widerstandsfähig sein, so dass im Falle eines Störfalls des in dem ersten Wärmeleitelement 212 platzierten mindestens einen elektrischen Elements 220die vom Störfall verursachte große Hitze und der hohe Druck durch die natürliche Wärmeleiteinrichtung und die Ablufteinrichtung 260 nach außen abgeleitet werden kann. Im Falle dieses hohen Druckanstieges bedingt durch den Störfall verschließt sich das mindestens Rückschlagsverhinderungselement 271, das in Fig. 2 als in Lager 272 gelagerte Rückschlagsklappe 271 ausgebildet ist, selbstständig, so dass kein Gas mit hohem Druck aus der Zuluftöffnung 270 an die Umgebung abgegeben wird. Bei sehr großer Hitzeentwicklung, wie z.B. im Falle eines Störlichtbogens, kann das Material der natürlichen Wärmeleiteinrichtung jedoch auch zumindest teilweise wegschmelzen, jedoch wird weiterhin durch den verbleibenden Teil der natürlichen Wärmeleiteinrichtung das durch den Störlichtbogen enstandene heisse Gas durch die Ablufteinrichtung 260 nach aussen abgeleitet.

Des Weiteren kann das erste Wärmeleitelement 212 als herausnehmbares Wärmeleitelement 212 ausgebildet sein, wie in Fig. 2 dargestellt, wobei das herausnehmbare Wärmelement 212 einen ersten Flansch 251 zur Verbindung an einen Flansch 250 des Zuluftkanals 211 aufweisen kann, und wobei das herausnehmbare Wärmeleitelement 212 einen zweiten Flansch 252 zur Verbindung an einen Flansch 253 des zweiten Wärmeleitelements 213 aufweisen kann.

Somit lässt sich das erste Wärmeleitelement 212 zwischen dem Zuluftkanal 211 und dem zweiten Wärmeleitelement 213 herausnehmen und auch wieder einfügen, wodurch z.B. ein Austausch des in dem herausnehmbaren Wärmeleitelement 212 platzierten mindestens einem elektrischen Element 220 einfach durch einen Austausch des herausnehmbaren Wärmeleitelement 212 bewerkstelligen lässt. Die elektrische Funktionseinheit 200 kann eine herausnehmbare oder wegklappbare Öffnung 201 aufweisen, durch das sich das herausnehmbare Wärmeleitelement 212 aus der elektrischen Funktionseinheit 200 entnehmen lässt.

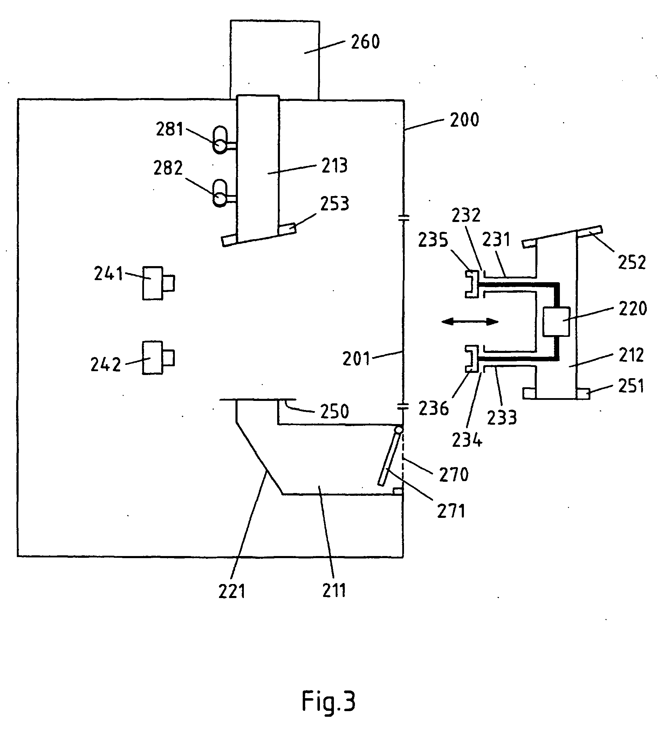

Figur 3 zeigt eine schematische Darstellung einer erfindungsgemäßen Vorrichtung 211, 213 und eines erfindungsgemäßen Wärmeleitelements 212 für ein System 211, 212, 213 zur Belüftung einer elektrischen Funktionseinheit 200.

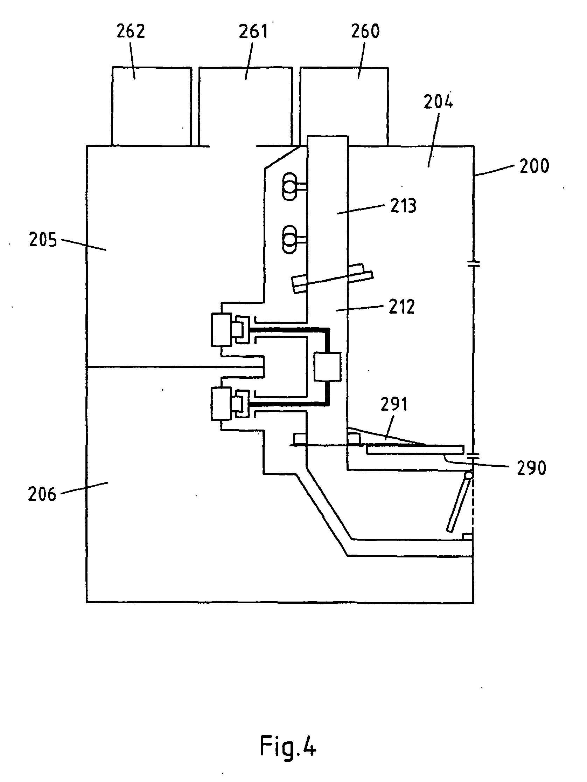

Die Vorrichtung 211, 213 für ein System 211, 212, 213 zur Belüftung einer elektrischen Funktionseinheit 200 umfasst mindestens einen an eine Zuluftöffnung 270 angeschlossenen Zuluftkanal 211, und mindestens ein Wärmeleitelement 213, wobei das in Figur 3 dargestellte Wärmeleitelement 213 und der dargestellte Zuluftkanal 211 derart ausgebildet sind, dass zwischen dem Wärmeleitelement 213 und dem Zuluftkanal 211 ein weiteres mindestens ein elektrisches Element 220 umfassendes Wärmeleitelement 212 platzierbar ist. Ist das weitere Wärmeleitelement 212 in der Vorrichtung platziert, so bilden der Zuluftkanal 211, das platzierte Wärmeleitelement 212 und das Wärmeleitelement 213 eine natürliche Wärmeleiteinrichtung, die z.B. der in Fig. 2 gezeigten natürlichen Wärmeleiteinrichtung oder der in Fig. 4 gezeigten natürlichen Wärmeleiteinrichtung entsprechen kann, wobei das platzierte Wärmeleitelement 212 dem ersten Kaminelement 212 der dritten bzw. vierten Ausführungsform entspricht, und das Wärmeleitelement 213 dem zweiten Kaminelement 213 der dritten bzw. vierten Ausführungsform entspricht. Gleichzeitig kann eine Kontaktierung des mindestens einen elektrischen Elements 220 über die Kontakte 235, 236 der platzierbaren Wärmeleiteinrichtung mit den Kontakten 241, 242 der elektrischen Funktionseinheit erfolgen.

Die zuvor genannten Erläuterungen für die in der Fig. 2 gezeigten dritten Ausführungsformen gelten gleichermaßen für die in Fig. 3 gezeigte Vorrichtung und das platzierbare Wärmeleitelement 212, insbesondere, wenn das platzierbare Wärmeleitelement 212 zwischen dem Zuluftschacht 211 und der zweiten Wärmeleiteinrichtung 213 platziert ist, und somit gemeinsam ein erfindungsgemäßes System zur Belüftung der elektrischen Funktionseinheit 200 bilden, wie es beispielsweise in Fig. 2 dargestellt ist.

Das platzierbare Wärmeleitelement 212, das auch als ein aus dem erfindungsgemäßen System herausnehmbares Wärmeleitelement 212 betrachtet werden kann, kann beispielsweise als zwischen dem Zuluftschacht 211 und dem zweiten Wärmeleitelement 213 einschiebbares und herausschiebbares Modul 212 ausgebildet sein.

Figur 4 zeigt eine schematische Darstellung einer vierten Ausführungsform, bei der das herausnehmbare Wärmeleitelement 212 als zwischen dem Zuluftschacht 211 und dem zweiten Wärmeleitelement 213 einschiebbares und herausschiebbares Modul 212 ausgebildet ist. In Figur 4 sind aus Übersichtlichkeitsgründen nicht alle Bezugszeichen bei Elementen, die schon in den Figuren 2 oder 3 gleichermaßen dargestellt sind, eingetragen.

Die elektrische Funktionseinheit 204 kann beispielsweise Führungsmittel 290 zum bündigen Einschieben und Herausziehen des Moduls 212 zwischen dem Zuluftschacht und dem zweiten Wärmeleitelement 213 aufweisen, wobei die Führungsmittel beispielsweise Schienen oder ähnliches sein können. Das Modul 212 kann eine auf diesen Führungsmittel 290 bewegliche Einfahrkonsole 291 aufweisen, so dass das Modul geführt durch die Führungsmittel 290 und die darauf bewegliche Einfahrkonsole 291 leicht in die auf Fig. 4 gezeigt Position zwischen dem Zuluftschacht 211 und dem zweiten Wärmeleitelement 213 eingeschoben und auch wieder herausgezogen werden kann. Diese Einfahrkonsole 291 kann beispielsweise auch noch weitere Zuluftöffnungen zur Kühlung des mindestens einen elektrischen Elements 220 in dem Modul 212 aufweisen.

Des Weiteren kann das zweite Wärmeleitelement 213 Mittel zur Aufnahme und/oder Einpassung des einschiebbaren und herausziehbaren Moduls 212 zwischen dem Zuluftschacht 211 und dem zweiten Wärmeleitelement 213 aufweisen, wie z.B. die in Fig. 4 dargestellte schwimmende Lagerung 281, 282 des vertikal platzierten zweiten Wärmeleitelements 213. Die schwimmende Lagerung 281, 282 erlaubt eine vertikale Bewegung des zweiten Wärmeleitelements 213. Des Weiteren kann der Flansch 253 des zweiten Wärmeleitelements 213 rampenförmig ausgebildet sein, wobei der zweite Flansch 252 des Moduls 212 ebenfalls rampenförmig ausgebildet sein kann, so dass sich beim Einschieben des Moduls 212 der rampenförmige Flansch 252 des Moduls 212 unter den rampenförmigen Flansch 253 des zweiten Wärmeleitelements 213 schiebt, dabei das zweite Wärmeleitelement leicht nach oben bewegt, so dass eine bündige Verbindung zwischen dem rampenförmigen Flansch 252 des Moduls 212 und dem rampenförmigen Flansch 253 des zweiten Wärmeleitelements erreicht wird, wenn das Modul vollständig eingeschoben ist. Die schwimmende Lagerung 281, 282 ist so ausgebildet, dass beim Herausnehmen des Moduls 212 das zweite Wärmeleitelement in einer Position fixiert wird, in dem sich das Modul 212 wieder einschieben lässt, wie z.B. in Fig. 3 dargestellt. Des Weiteren wird beim Einschieben des Moduls automatisch die Kontaktierung des mindestens einen elektrischen Elements 220 des Moduls 212 über die Kontakte 235, 236 mit den entsprechenden Kontakten 241, 242 der elektrischen Funktionseinheit 200 hergestellt.

In der in Figur 4 gezeigten vierten Ausführungsform umfasst die elektrische Funktionseinheit 200 beispielhaft drei Räume 204, 205, 206, wobei die elektrische Funktionseinheit beispielsweise eine Schaltanlage darstellen kann, und der erste Raum 204 einen Leistungsschalterraum oder Entlastungsbereich darstellen kann, der zweite Raum 205 einen Sammelschienenbereich und der dritte Raum 206 einen Kabelanschlussbereich darstellen kann. Das erste Wärmeleitelement 212 kann beispielsweise ein Polrohr eines Leistungsschalters 220 darstellen, welches über die zwei als Kontaktarme 231, 232 ausgebildeten Rohre und deren Kontakte 235, 236 an einen Kontakt im Sammelschienenbereich 241 und einen Kontakt 242 im Kabelanschlussbereich angeschlossen sein kann, wobei über die Ansaugöffnungen 232, 234 der Kontaktarme 231, 233 gleichzeitig Wärme angesaugt und abgeleitet werden kann.

Figur 4 zeigt exemplarisch nur eine natürliche Wärmeleiteinrichtung mit einem elektrischen Element 220, das z.B. ein Leistungsschalter sein kann, es können sich jedoch in der elektrischen Funktionseinheit 200 weitere natürliche Wärmeleiteinrichtungen befinden, wie z.B. eine zweite und ein eine dritte natürliche Wärmeleiteinrichtung mit jeweils einem weiteren Leistungsschalter im Leistungsschalterraum 204, oder auch eine natürliche Wärmeleiteinrichtung im Sammelschienenbereich 205 und/oder eine natürliche Wärmeleiteinrichtung im Kabelanschlussbereich 206. Für diese weiteren Wärmeleiteinrichtungen gelten die zuvor genannten Erläuterungen über die in den Figuren 1a-4 gezeigten Wärmeleiteinrichtung gleichermaßen, diese weiteren Wärmeleiteinrichtungen müssen jedoch nicht zwangsläufig ein elektrisches Element beinhalten, sie können auch über mindestens eine Ansaugöffnung Luft aus dem jeweiligen Raum bzw. Bereich der Funktionseinheit 200 absaugen und somit Wärme nach außen führen. Hierbei kann jedem Raum eine gesonderte Abluftvorrichtung 260, 261, 262 zugeordnet sein, wobei jede dieser Abluftvorrichtung gleichzeitig Mittel umfassen kann, welche verhindert, dass Gas mit hohem Druck, wie z.B. von einem Störfall innerhalb der Funktionseinheit verursacht, an die Umgebung abgelassen wird und dort eine Gefährdung darstellen könnte.

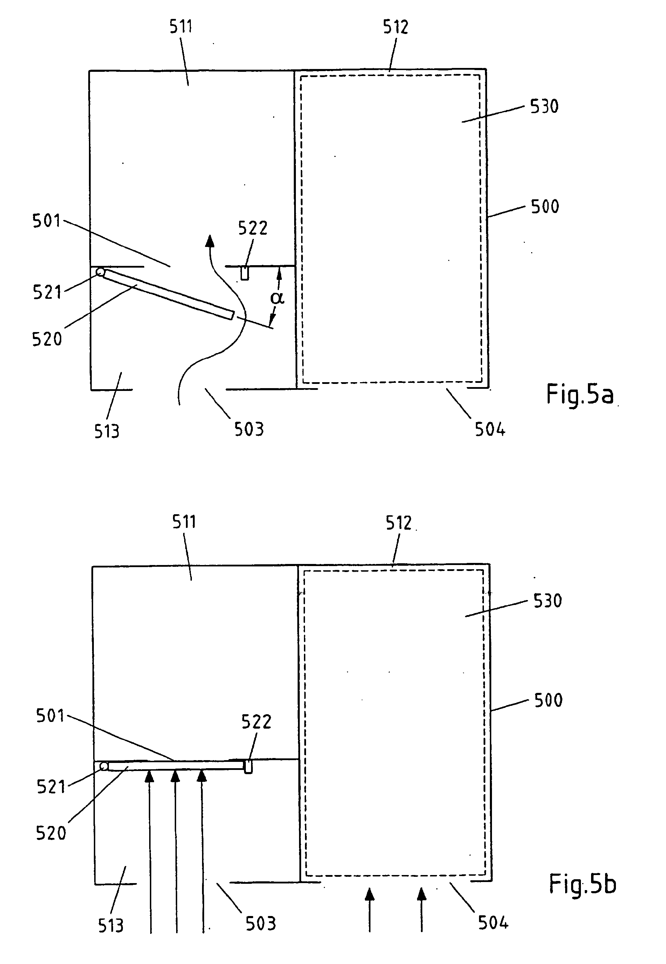

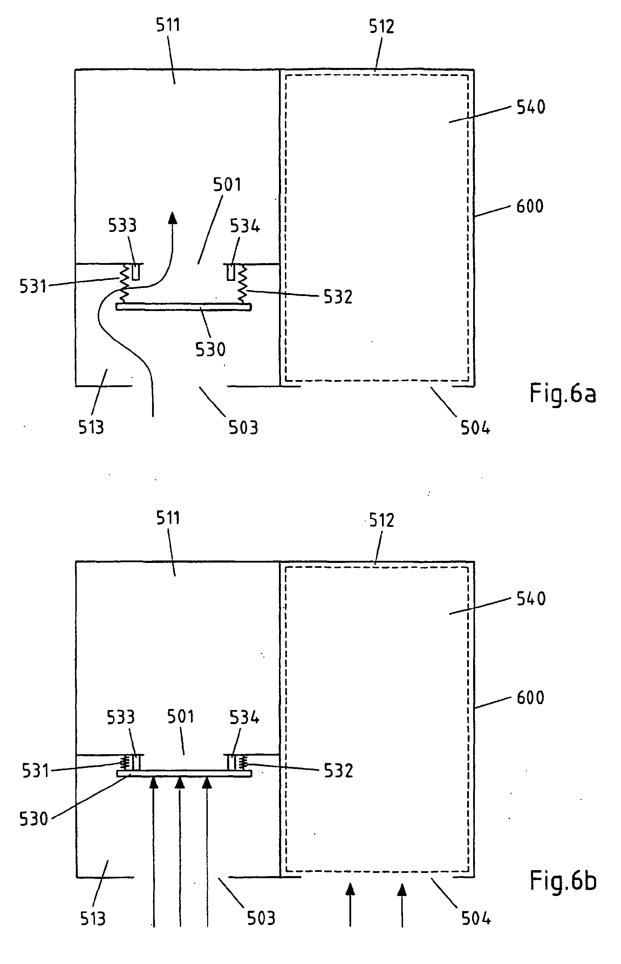

In den Figuren 5a, 5b und 6a, 6b sind exemplarische zwei verschiedene Abluftvorrichtung gezeigt, welche für die in den Figuren 2-4 verwendeten Abluftvorrichtungen 260, 261, 262 verwendet werden können, oder welche auf die Ausgangsöffnung der in Figuren 1a und 1b gezeigten natürlichen Wärmeleiteinrichtungen 110 angebracht werden kann.

Die Figuren 5a, 5b zeigen schematisch eine Darstellung einer ersten exemplarischen Abluftvorrichtung des erfindungsgemäßen Systems zur Belüftung einer elektrischen Funktionseinheit, wobei die Abluftvorrichtung 500 eine Sammelkammer 513 mit einer Öffnung 503, eine in einem ersten Abströmweg liegende erste Kammer 511 und ein in einem zweiten Abströmweg liegende zweite Kammer 512 umfasst.

Die Sammelkammer 513 und die erste Kammer 511 können als Abluftkamin ausgebildet sein. Des Weiteren dient die zweite Kammer 512 als Baueinheit zur Aufnahme mindestens einen Absorberelements 530.

Diese Abluftvorrichtung 500 kann beispielsweise an die in den verschiedenen Ausführungsformen gezeigte elektrische Funktionseinheit der Mittel- und/oder Hochspannung 100, 200 angebracht werden, z.B. als Abluftvorrichtung 260 in der dritten oder vierten Ausführungsform, oder als eine der weiteren Abluftvorrichtung 261, 262 in der vierten Ausführungsform, wobei die Abluftvorrichtung 500 durch die Öffnung 503 Gas von der Funktionseinheit 100, 200 aufnehmen kann und über die erste Kammer 511 und/oder die zweite Kammer 512 an die Umgebung außerhalb der Funktionseinheit 100, 200 ableiten kann.

Das Verschlusselement 520 stellt ein in Lager 521 gelagertes Schwenkelement 520 dar, kann jedoch auch durch andere Verschlusselement wie z.B. mindestens ein Ventil ersetzt werden; in den Figuren 5a und 5b wird eine in Lager 521 gelagerte schwenkbare Klappe 520 verwendet.

Figur 5a zeigt die Klappe 520 in einem ersten Zustand, wobei die Klappe 520 in einem vorbestimmten Winkel α, der einen Öffnungswinkel zur Eingangsöffnung 501 darstellt, positioniert ist, so dass z.B. von einer Funktionseinheit herkommendes Gas durch die mit Winkel α geöffnete Klappe 520 durch die Eingangsöffnung 501 in die erste Kammer 51 strömen kann. Auf die in dem Luftstrom stehende vom Winkel α abhängige Seitenfläche der Klappe 520 wird durch die Druckdifferenz zwischen dem Druck in der Sammelkammer 513 und der ersten Kammer 511 eine Kraft ausgeübt, wobei der Winkel α, der Reibungswiderstand des Lagers 521, und, falls die Klappe 520 hängend angeordnet ist, das Gewicht der Klappe 520, so auszulegen sind, dass die vom Luftstrom ausgeübte Kraft auf die Klappe im normalen Betrieb einer elektrischen Funktionseinheit, d.h. wenn kein Störfall vorliegt, die Klappe in dem Winkel α geöffnet lässt, damit die Abwärme zuverlässig durch die erste Kammer 511 abgeleitet werden kann.

Erfolgt ein Druckanstieg in der Sammelkammer 513, so dass die Druckdifferenz zwischen dem Druck in der Sammelkammer 513 und der ersten Kammer einen vorbestimmten druckabhängigen Schwellwert überschreitet, so wird die auf durch die Druckdifferenz auf die Klappe 520 einwirkende Kraft so groß, dass die Klappe sich um das Lager 521 schwenkt und die Eingangsöffnung 501 und somit die erste Kammer 511 und den ersten Abströmweg verschließt, wie in Fig. 5b dargestellt. Dieser druckabhängige Schwellwert wird beispielsweise so gewählt, dass die Klappe 520 durch einen Störfall in der elektrischen Funktionseinheit, in die Sammelkammer einströmendem heißen Gas durch den Druckanstieg des Gases sich vom ersten Zustand in einen zweiten Zustand bewegt die Eingangsöffnung 501 verschließt, so dass das heiße Gas durch die Öffnung 504 der zweiten Kammer 512 in das sich in der zweiten Kammer 512 befindende mindestens eine Absorberelement 530 geleitet wird, wie in Fig. 5b gezeigt. Der druckabhängige Schwellwert kann beispielsweise über den Winkel α eingestellt werden, wobei die Klappe 520 bei einem kleinem Winkel schon bei geringeren Druckdifferenzen zwischen der Sammelkammer 513 und der ersten Kammer 511 schließt, und wohingegen die Klappe 520 bei größeren Winkeln α mit α<90° erst bei höheren Druckdifferenzen schließt. Wird die Klappe 520 beispielsweise hängend eingebaut, d.h. befindet sich die erste Kammer 511 oberhalb der Sammelkammer 513, so kann der druckabhängige Schwellwert auch über das Gewicht der Klappe eingestellt werden. Ferner kann der druckabhängige Schwellwert auch über die Eigenschaften des Lagers 521 eingestellt werden, wie z.B. der Reibungswiderstand des Lagers und/oder das Loslösemoment aus der Ruhelage. Ferner kann die Klappe 510 störlichtbogenfest, zumindest für eine vorbestimmte Zeit, ausgelegt sein.

Des Weiteren kann die Vorrichtung 500 eine Haltevorrichtung 522 zur Arretierung der Klappe 520 im zweiten Zustand aufweisen, wobei diese Haltevorrichtung 522 beispielsweise verhindern kann, dass die vom ersten Zustand in den zweiten Zustand bewegte Klappe beim Schließvorgang der einen Eingangsöffnung 501 wieder zurückprallt und den durch die erste Kammer 511 führenden mindestens einen ersten Abströmweg wieder öffnet.

Das mindestens eine Absorberelement 530 kann durch sämtliche in der Beschreibung aufgeführten Ausführungen mit den darin geschilderten Vorteilen realisiert werden, wobei das mindestens eine Absorberelement 530 beispielsweise so auszugestalten ist, dass mit hohem Druck einströmendes heißes Gas soweit druckgemindert und abgekühlt wird, so dass das aus dem zweiten Abströmweg austretende Gas keine Gefährdung für Personen darstellt.

Diese Ausführungen und Vorteile bezüglich der ersten exemplarischen Abluftvorrichtung des erfindungsgemäßen Systems zur Belüftung einer elektrischen Funktionseinheit 100, 200 gelten gleichermaßen für die in den Figuren 6a und 6b gezeigte schematische Darstellung einer zweiten exemplarischen Abluftvorrichtung des erfindungsgemäßen Systems zur Belüftung einer elektrischen Funktionseinheit, sich diese zweite exemplarische Abluftvorrichtung von der ersten exemplarischen Abluftvorrichtung darin unterscheidet, dass das Verschlusselement nun durch eine in einer Federeinheit 231, 232 aufgehängten Platte 230 realisiert wird.

Figur 6a zeigt die Platte 530 in einem ersten Zustand, wobei die Eingangsöffnung 501 geöffnet ist und Gas von der Sammelkammer 513 durch das Verschlusselement 530, 531, 532 in die erste Kammer 511 strömen kann.

Eine positive Druckdifferenz zwischen dem Druck des einströmenden Gases in der Sammelkammer 513 und dem Druck des Gases in der ersten Kammer 511 bewirkt eine Kraft auf die Platte 530, die die Platte in die aus den Federelementen 531, 532 bestehende Federeinheit drückt. Die Federeinheit kann beispielsweise mehrere Spiralfedern 531, 532 umfassen, oder andere Federarten umfassen. Es kann auch zusätzlich noch mindestens einen Dämpfer (nicht gezeigt) umfassen.

Die Platte 530 und das Federelement 531, 532 sind so auszulegen, dass beispielsweise im normalen Betrieb einer elektrischen Funktionseinheit dem durch die Sammelkammer 513 und die Kammer 511 abströmenden Gas nur ein geringer Widerstand entgegengesetzt wird, d.h. der Abstand der Platte 530 darf einen Mindestabstand zur Eingangsöffnung 501 nicht unterschreiten.

Im Falle eines vorbestimmbaren Druckanstieges in der Sammelkammer 513 wird die Druckdifferenz zwischen der Sammelkammer 513 und der ersten Kammer 511 so groß, dass die auf die Platte 530 wirkende Kraft die Platte 530 soweit in die Federelemente 531, 532 drückt, dass die Eingangsöffnung 501 von der Platte 530 verschlossen wird, und sich die Platte 530 dabei in einem zweiten Zustand befindet, wie in Fig. 5b gezeigt.

Damit verschließt die Platte 530 bei Überschreiten eines druckabhängigen Schwellwertes den durch die erste Kammer 511 führenden ersten Abströmweg, wobei für die Auswahl des druckabhängigen Schwellwertes die im zweiten Ausführungsbeispiel und in der Beschreibung genannten Erläuterungen gelten. Der druckabhängige Schwellwert kann beispielsweise über eine Federkraft der Federeinheit eingestellt werden, oder auch über das Gewicht der Platte, wenn die Platte hängend unter der Eingangsöffnung platziert ist.

Des Weiteren kann die Vorrichtung 600 eine Haltevorrichtung 533, 534 für die Arretierung der mindestens einen Platte im zweiten Zustand aufweisen, wobei diese Haltevorrichtung auch eine Abdichtfunktion der Platte 530 gegenüber der Eingangsöffnung 501 aufweisen kann.

Die Haltevorrichtung kann beispielsweise verhindern, dass die mindestens eine vom ersten Zustand in den zweiten Zustand bewegte Platte beim Schließvorgang von der mindestens einen Eingangsöffnung wieder zurückprallt und den mindestens einen ersten Abströmweg wieder öffnet, darüber hinaus kann ein Schwingvorgang der mindestens einen Platte zusammen mit den Federn der Federeinheit verhindert werden.

## Patentansprüche

1. System zur Belüftung einer elektrischen Funktionseinheit der Hoch- und Mittelspannung (100, 200), wobei das System mindestens eine innerhalb der elektrischen Funktionseinheit verlaufende natürliche Wärmeleiteinrichtung (110, 211, 212, 213) umfasst, wobei die mindestens eine natürliche geschlossene Wärmeleiteinrichtung (110, 211, 212, 213) an mindestens eine nach außerhalb der elektrischen Funktionseinheit führende Zuluftöffnung (130, 270) angeschlossen ist, und wobei in mindestens einer der mindestens einen natürlichen Wärmeleiteinrichtung (110, 211, 212, 213) mindestens ein elektrisches Element (120, 220) platziert ist, und wobei mindestens eine der mindestens einen natürlichen Wärmeleiteinrichtung (110, 211, 212, 213) mindestens drei Komponenten (211, 212, 213) umfasst, wobei eine erste Komponente (211) einen an die mindestens eine Zuluftöffnung (130, 270) angeschlossenen Zuluftkanal (211) darstellt, und eine zweite Komponente (212) ein mindestens eines des mindestens einen elektrischen Elements (120, 220) beinhaltendes erstes Wärmeleitelement (212) darstellt, und eine dritte Komponente (213) ein zweites Wärmeleitelement (213) darstellt, und wobei das erste Wärmeleitelement (212) zwischen dem Zuluftkanal (211) und dem zweiten Wärmeleitelement (213) angeordnet ist und in einem Raum der elektrischen Funktionseinheit platziert ist.

2. System nach Anspruch 1, **dadurch gekennzeichnet, dass** mindestens eine der mindestens einen natürlichen Wärmeleiteinrichtung (110, 211, 212, 213) mindestens eine Ansaugöffnung (150, 232, 234) innerhalb der elektrischen Anlage aufweist.

3. System nach Anspruch 2, **dadurch gekennzeichnet, dass** sich mindestens ein weiteres elektrisches Element (150, 235, 236, 241, 242) in der Nähe von mindestens einer der mindestens einen Ansaugöffnung (150, 232, 234) befindet.

4. System nach einem der Ansprüche 1-3, **dadurch gekennzeichnet, dass** die mindestens eine Zuluftöffnung (130, 270) mit mindestens einem Rückschlagverhinderungselement (270) versehen ist.

5. System nach Anspruch 4, **dadurch gekennzeichnet dass** das mindestens eine Rückschlagverhinderungselement (270) mindestens eine Rückschlagklappe (270) darstellt.

6. System nach einem der Ansprüche 1-5, **dadurch gekennzeichnet, dass** die mindestens eine natürliche Wärmeleiteinrichtung (110, 211, 212, 213) in mindestens eine Abluftvorrichtung (260, 261, 262, 500, 600) mündet, wobei die mindestens eine Abluftvorrichtung (260, 261, 262, 500, 600) die von der mindestens einen natürliche Wärmeleiteinrichtung (110, 211, 212, 213) geleitete Luft außerhalb die elektrische Funktionseinheit (100, 200) leitet.

7. System nach Anspruch 6, **dadurch gekennzeichnet, dass** mindestens eine der mindestens einen Abluftvorrichtung (260, 261, 262, 500, 600) mindestens einen ersten Abströmweg (511) und mindestens einen zweiten Abströmweg (512) umfasst, wobei der mindestens eine erste Abströmweg (511) durch mindestens ein Verschlusselement (520, 530) verschließbar ist, und der mindestens eine zweite Abströmweg (512) mindestens ein Absorberelement (540) zur Absorption und Dämpfung heißer Gase umfasst, und wobei das mindestens eine Verschlusselement (520, 530) bei Überschreiten eines vorbestimmten druckabhängigen Schwellwertes den mindestens einen ersten Abströmweg (511) verschließt.

8. System nach Anspruch 7, **dadurch gekennzeichnet, dass** der druckabhängige Schwellwert derart vorbestimmt ist, dass das mindestens eine Verschlusselement (520, 530) im normalen Betrieb der elektrischen Funktionseinheit (100, 200) den mindestens einen ersten Abströmweg (511) nicht verschließt, und dass bei störungsbedingten Druckanstieg das mindestens eine Verschlusselement (520, 530) den mindestens einen ersten Abströmweg (511) verschließt.

9. System nach Anspruch 1, **dadurch gekennzeichnet, dass** das erste Wärmeleitelement (212) aus einem dielektrischen Material besteht.

10. System nach Anspruch 1, **dadurch gekennzeichnet, dass** das erste Wärmeleitelement (212) mindestens einen aus dem erstem Wärmeleitelement (212) herausgeführten elektrischen Kontakt (235, 236) zum Anschluss des beinhalteten mindestens einen elektrischen Elements (120, 220) an die elektrische Funktionseinheit (100, 200) aufweist, und wobei das erste Wärmeleitelement (212) mindestens eine in der Nähe von mindestens einem des mindestens einen elektrischen Kontakts (235, 236) befindende Ansaugöffnung (232, 234) umfasst.

11. System nach Anspruch 10, **dadurch gekennzeichnet, dass** mindestens eine der mindestens einen Ansaugöffnung (232, 234) des ersten Wärmeleitelements (212) über ein Rohr (231, 233) in die Nähe eines elektrischen Elements verlängert ist.

12. System nach Anspruch 11, wobei das Rohr (231, 233) aus dielektrischem Material besteht.

13. System nach einem der Ansprüche 1-12, **dadurch gekennzeichnet, dass** das zweite Wärmeleitelement (213) oberhalb des Zuluftkanals (211) und des ersten Wärmeleitelements (212) angeordnet ist.

14. System nach einem der Ansprüche 1-13, **dadurch gekennzeichnet, dass** das erste Wärmeleitelement (212) als herausnehmbares Wärmeleitelement (212) zwischen dem Zuluftkanal (211) und dem zweiten Wärmeleitelement (213) ausgebildet ist.

15. System nach Anspruch 14, **dadurch gekennzeichnet, dass** das herausnehmbare Wärmeleitelement (212) als zwischen dem Zuluftkanal (211) und dem zweiten Wärmeleitelement (213) einschiebbares und herausziehbares Modul (212) ausgebildet ist.

16. System nach Anspruch 15, **dadurch gekennzeichnet, dass** das zweite Wärmeleitelement (213) Mittel zur Einpassung des einschiebbaren und herausziehbaren Moduls (212) zwischen dem Zuluftschacht (211) und dem zweiten Wärmeleitelement (212) umfasst.

17. System nach Anspruch 16, **dadurch gekennzeichnet, dass** das zweite Wärmeleitelement (213) schwimmend gelagert ist und einen rampenförmigen Flansch (253) aufweist, und wobei das einschiebbare und herausziehbare Modul (212) einen rampenförmigen Flansch (252) zur Verbindung mit dem rampenförmigen Flansch (253) des zweiten Wärmeleitelements (213) aufweist.

18. System nach einem der Ansprüche 14-17, **dadurch gekennzeichnet, dass** das herausnehmbare Wärmeleitelement (212) mindestens einen aus dem herausnehmbaren Wärmeleitelement (212) herausgeführten elektrischen Kontakt (235, 236) zum Anschluss des beinhalteten mindestens einen elektrischen Elements (220) an die elektrische Funktionseinheit (100, 200) aufweist, und wobei der mindestens eine elektrische Kontakt (235, 236) bei eingebautem Zustand des herausnehmbaren Wärmeleitelements (212) elektrischen Kontakt mit der elektrischen Funktionseinheit (100, 200) herstellt, und wobei dieser elektrische Kontakt bei Herausnehmen des herausnehmbaren Wärmeleitelements (212) getrennt wird.

19. System nach Anspruch 18, **dadurch gekennzeichnet, dass** das herausnehmbare Wärmeleitelement (212) mindestens eine in der Nähe von mindestens einem des mindestens einen elektrischen Kontakts (235, 236) befindende Ansaugöffnung (232, 234) umfasst.

20. System nach Anspruch 19, **dadurch gekennzeichnet, dass** mindestens eine der mindestens einen Ansaugöffnung (232, 234) des herausnehmbaren Wärmeleitelements (212) über ein Rohr (231, 233) in die Nähe von mindestens einem des mindestens einen elektrischen Kontakts (235, 236) verlängert ist.

21. System nach Anspruch 20, **dadurch gekennzeichnet, dass** mindestens einer des mindestens einen elektrischen Kontakts (235, 236) durch mindestens eine der mindestens einen durch ein Rohr (231, 233) verlängerten Ansaugöffnung (232, 234) aus dem herausnehmbaren Wärmeleitelement (212) herausgeführt ist.

22. System nach Anspruch 21, **dadurch gekennzeichnet, dass** das Rohr (231, 233) aus dielektrischem Material besteht.

23. System nach einem der Ansprüche 1-22, **dadurch gekennzeichnet, dass** mindestens eines des mindestens einen elektrischen Elements (120, 220) ein Wechselrichter für Mittelspannung und/oder Hochspannung ist.

24. System nach einem der Ansprüche 1-23, **dadurch gekennzeichnet, dass** mindestens eines des mindestens einen elektrischen Elements (120, 220) ein Transformator für Mittelspannung und/oder Hochspannung ist.

25. System nach einem der Ansprüche 1-24, **dadurch gekennzeichnet, dass** mindestens eines des mindestens einen elektrischen Elements (120, 220) ein Leistungsschalter für Mittelspannung und/oder Hochspannung ist.

26. System nach einem der Ansprüche 1-25, **dadurch gekennzeichnet, dass** die elektrische Funktionseinheit (100, 200) eine Schaltanlage für Mittelspannung und/oder Hochspannung darstellt.

27. System nach Anspruch 26, **dadurch gekennzeichnet, dass** die Schaltanlage luftisoliert ist.

28. System nach Anspruch 27, **dadurch gekennzeichnet, dass** die Schaltanlage gasisoliert ist.

29. Wärmeleitelement für ein System zur Belüftung einer elektrischen Funktionseinheit der Hoch- und Mittelspannung (120, 220), wobei das System mindestens einen an mindestens eine Zuluftöffnung (130, 270) angeschlossenen Zuluftkanal (211) umfasst, und wobei das System mindestens ein zweites Wärmeleitelement (213) umfasst; wobei in dem Wärmeleitelement (212) für das System mindestens ein elektrisches Element (120, 220) platziert ist, und das Wärmeleitelement (212) zwischen einem ersten des mindestens einen Zuluftkanals (211) und einem ersten des mindestens einen zweiten Wärmeleitelements (213) platzierbar ist, so dass der erste des mindestens einen Zuluftkanals (211), das platzierte Wärmeleitelement (213), und das erste des mindestens einen zweiten Wärmeleitelements (213) eine innerhalb der elektrischen Funktionseinheit verlaufende natürliche geschlossene Wärmeleiteinrichtung (110, 211, 212, 213) bilden.

30. Vorrichtung für ein System zur Belüftung einer elektrischen Funktionseinheit der Hoch- und Mittelspannung (100, 200), wobei die Vorrichtung mindestens einen an mindestens eine Zuluftöffnung (130, 270) angeschlossenen Zuluftkanal (211) umfasst, und wobei die Vorrichtung mindestens ein Wärmeleitelement (213) umfasst; und wobei mindestens ein erster des mindestens einen Zuluftkanals (211) und mindestens ein erstes des mindestens einen Wärmeleitelements (213) derart ausgebildet sind, dass zwischen dem ersten des mindestens einen Zuluftkanals (211) und dem ersten des mindestens einen Wärmeleitelements (213) ein weiteres mindestens ein elektrisches Element (120, 220) umfassendes Wärmeleitelement (212) platzierbar ist, so dass der erste des mindestens einen Zuluftkanals (211), das platzierte weitere Wärmeleitelement (212), und das erste des mindestens einen Wärmeleitelements (213) eine innerhalb der elektrischen Funktionseinheit (100, 200) verlaufende natürliche geschlossene Wärmeleiteinrichtung (110, 211, 212, 213) bilden.

## Claims

1. A system for the ventilation of a high and medium voltage electrical functional unit (100, 200), wherein
the system comprises at least one natural heat transfer device (110, 211, 212, 213) operating within the electrical functional unit, wherein
the at least one natural closed heat transfer device (110, 211, 212, 213) is connected to at least one air supply opening (130, 270) leading outside the electrical functional unit, and wherein
at least one electrical element (120, 220) is placed in at least one of the at least one natural heat transfer device (110, 211, 212, 213), and wherein
at least one of the at least one natural heat transfer devices (110, 211, 212, 213) comprises at least three component (211, 212, 213), wherein
a first component (211) represents an air supply passage (211) connected to the at least one air supply opening (130, 270), and a second component (212) represents a heat transfer element (212) containing at least one of the at least one electrical element (120, 220), and a third component (13) represents a second heat transfer element (213), and wherein
the first heat transfer element (212) is arranged between the air supply passage (211) and the second heat transfer element (213) and is placed in a chamber of the electrical functional unit.

2. The system in accordance with Claim 1,
**characterised in that** at least one of the at least one natural heat transfer device (110, 211, 212, 213) has at least one intake opening (150, 232, 234) within the electrical plant.

3. The system in accordance with Claim 2,
**characterised in that** at least one further electrical element (150, 235, 236, 241, 242) is located in the vicinity of at least one of the at least one intake opening (150, 232, 234).

4. The system in accordance with one of the Claims 1 to 3,
**characterised in that** the at least one air supply opening (130, 270) is provided with at least one backflow prevention element (270).

5. The system in accordance with Claim 4,
**characterised in that** the at least one backflow prevention element (270) represents at least one non-return valve (270).

6. The system in accordance with one of the Claims 1 to 5,
**characterised in that** the at least one natural heat transfer device (110, 211, 212, 213) discharges into at least one air outlet device (260, 261, 262, 500, 600), wherein
the at least one air outlet device (260, 261, 262, 500, 600) conducts the air conducted from the at least one natural heat transfer device (110, 211, 212, 213) outside the electrical functional unit (100, 200).

7. The system in accordance with Claim 6,
**characterised in that** at least one of the at least one air outlet device (260, 261, 262, 500, 600) comprises at least one first outlet flow path (511) and at least one second outlet flow path (512), wherein
the at least one first outlet flow path (511) can be closed by means of at least one closure element (520, 530), and the at least one second outlet flow path (512) comprises at least one absorber element (540) for the absorption and attenuation of hot gases, and wherein
the at least one closure element (520, 530) closes the at least one first outlet flow path (511) in the event that a predetermined pressure-dependent threshold value is exceeded.

8. The system in accordance with Claim 7, **characterised in that** the pressure-dependent threshold value is predetermined such that in normal operation of the electrical functional unit (100, 200) the at least one closure element (520, 530) does not close the at least one first outlet flow path (511),
and **in that** in the event of a fault-conditioned pressure rise the at least one closure element (520, 530) closes the at least one first outlet flow path (511).

9. The system in accordance with Claim 1,
**characterised in that** the first heat transfer element (212) consists of a dielectric material.

10. The system in accordance with Claim 1,
**characterised in that** the first heat transfer element (212) has at least one electrical contact (235, 236) that is led out of the first heat transfer element (212) for the purpose of connecting the at least one included electrical element (120, 220) to the electrical functional unit (100, 200), and wherein
the first heat transfer element (212) comprises at least one intake opening (232, 234) located in the vicinity of at least one of the at least one electrical contact (235, 236).

11. The system in accordance with Claim 10, **characterised in that** at least one of the at least one intake opening (232, 233) of the first heat transfer element (212) is extended via a tube (231, 233) into the vicinity of an electrical element.

12. The system in accordance with Claim 11, wherein
the tube (231, 233) consists of a dielectric material.

13. The system in accordance with one of the Claims 1 to 12,
**characterised in that** the second heat transfer element (213) is arranged above the air supply passage (211) and the first heat transfer element (212).

14. The system in accordance with one of the Claims 1 to 13,
**characterised in that** the first heat transfer element (212) is designed as a removable heat transfer element (212) between the air supply passage (211) and the second heat transfer element (213).

15. The system in accordance with Claim 14,
**characterised in that** the removable heat transfer element (212) is designed as a module that can be inserted and removed between the air supply passage (211) and the second heat transfer element (213).

16. The system in accordance with Claim 15, **characterised in that** the second heat transfer element (213) comprises means for the fitting of the insertable and removable module (212) between the air supply shaft (211) and the second heat transfer element (213).

17. The system in accordance with Claim 16,
**characterised in that** the second heat transfer element (213) is mounted in a floating manner and has a ramp-shaped flange (253), and wherein
the insertable and removable module (212) has a ramp-shaped flange (252) for the purpose of connecting with the ramp-shaped flange (253) of the second heat transfer element (213).

18. The system in accordance with one of the Claims 14 to 17,
**characterised in that** the removable heat transfer element (212) has at least one electrical contact (235, 236) that is led out of the removable heat transfer element (212) for the purpose of connecting the at least one included electrical element (120, 220) to the electrical functional unit (100, 200), and wherein
in the installed state of the removable heat transfer element (212) the at least one electrical contact (235, 236) makes electrical contact with the electrical functional unit (100, 200), and wherein
this electrical contact is broken in the event of removal of the removable heat transfer element (212).

19. The system in accordance with Claim 18,
**characterised in that** the removable heat transfer element (212) comprises at least one intake opening (232, 234) located in the vicinity of at least one of the at least one electrical contact (235, 236).

20. The system in accordance with Claim 19,
**characterised in that** at least one of the at least one intake opening (232, 234) of the removable heat transfer element (212) is extended via a tube (231, 233) into the vicinity of at least one of the at least one electrical contact (235, 236).

21. The system in accordance with Claim 20,
**characterised in that** at least one of the at least one electrical contact (235, 236) is led out of the removable heat transfer element (212) through at least one of the not less than one intake openings (232, 234) extended by means of a tube (231, 233).

22. The system in accordance with Claim 21,
**characterised in that** the tube (231, 233) consists of a dielectric material.

23. The system in accordance with one of the Claims 1 to 22, **characterised in that** at least one of the at least one electrical element (120, 220) is an alternating current converter for medium voltage and/or high voltage.

24. The system in accordance with one of the Claims 1 to 23,
**characterised in that** at least one of the at least one electrical element (120, 220) is a transformer for medium voltage and/or high voltage.

25. The system in accordance with one of the Claims 1 to 24,
**characterised in that** at least one of the not at least one electrical element (120, 220) is a circuit breaker for medium voltage and/or high voltage.

26. The system in accordance with one of the Claims 1 to 25,
**characterised in that** the electrical functional unit (100, 200) represents a switching station for medium voltage and/or high voltage.

27. The system in accordance with Claim 26,
**characterised in that** the switching station is air-insulated.

28. The system in accordance with Claim 27,
**characterised in that** the switching station is gas-insulated.

29. A heat transfer element for a system for the ventilation of a high and medium voltage electrical functional unit (120, 220), wherein
the system comprises at least one air supply channel (211) connected to at least one air supply opening (130, 270), and wherein
the system comprises at least one second heat transfer element (213), wherein
at least one electrical element (120, 220) is placed in the heat transfer element (212) for the system, and the heat transfer element (212) can be placed between a first of the at least one air supply channel (211) and a first of the at least one second heat transfer element (213), so that the first of the at least one air supply channel (211), the placed heat transfer element (213), and the first of the at least one second heat transfer element (213) form a natural closed heat transfer device (110, 211, 212, 213) operating within the electrical functional unit.

30. A device for a system for the ventilation of a high and medium voltage electrical functional unit (100, 200), wherein
the device comprises at least one air supply channel (211) connected to at least one air supply opening (130, 270), and wherein
the device comprises at least one heat transfer element (213), and wherein
at least one first of the at least one air supply channel (211) and at least one first of the at least one heat transfer element (213) are designed such that a further heat transfer element (212) comprising at least one electrical element (120, 220) can be placed between the first of the at least one air supply channel (211) and the first of the at least one heat transfer element (213), so that the first of the at least one air supply channel (211), the placed further heat transfer element (213), and the first of the at least one heat transfer element (213) form a natural closed heat transfer device (110, 211, 212, 213) operating within the electrical functional unit (100, 200).

## Revendications

1. Système pour la ventilation d'une unité fonctionnelle électrique de haute tension et de tension moyenne (100, 200), le système comprenant au moins un dispositif conducteur de chaleur (110, 211, 212, 213) naturel, agencé à l'intérieur de l'unité fonctionnelle électrique, le au moins un dispositif conducteur de chaleur (110, 211, 212, 213) fermé, naturel étant raccordé à au moins une ouverture d'arrivée d'air (130, 270) allant vers l'extérieur de l'unité fonctionnelle électrique, et au moins un élément (120, 220) électrique étant placé dans au moins l'un des au moins un dispositif conducteur de chaleur (110, 211, 212, 213) naturel, et au moins l'un des au moins un dispositif conducteur de chaleur (110, 211, 212, 213) naturel comprenant au moins trois composants (211, 212, 213), un premier composant (211) représentant un conduit d'arrivée d'air (211) raccordé à la au moins une ouverture d'arrivée d'air (130, 270), et un second composant (212) représentant un premier élément conducteur de chaleur (212) contenant au moins un élément (120, 220) électrique, et un troisième composant (213) représentant un second élément conducteur de chaleur (213), et le premier élément conducteur de chaleur (212) étant disposé entre le conduit d'arrivée d'air (211) et le second élément conducteur de chaleur (213), et étant placé dans un espace de l'unité fonctionnelle électrique.

2. Système selon la revendication 1, **caractérisé en ce qu'**au moins l'un des au moins un dispositif conducteur de chaleur (110, 211, 212, 213) naturel présente au moins une ouverture d'aspiration (150, 232, 234) à l'intérieur de l'installation électrique.

3. Système selon la revendication 2, **caractérisé en ce qu'**au moins un autre élément (150, 235, 236, 241, 242) électrique se trouve à proximité d'au moins l'un des au moins une ouverture d'aspiration (150, 232, 234).

4. Système selon l'une des revendications 1 à 3, **caractérisé en ce que** la au moins une ouverture d'arrivée d'air (130, 270) est dotée d'au moins un élément d'empêchement de retour (270).

5. Système selon la revendication 4, **caractérisé en ce que** le au moins un élément d'empêchement de retour (270) représente au moins un clapet anti-retour (270).

6. Système selon l'une des revendications 1 à 5, **caractérisé en ce que** le au moins un dispositif conducteur de chaleur (110, 211, 212, 213) naturel débouche dans au moins un dispositif d'évacuation d'air (260, 261, 262, 500, 600), le au moins un dispositif d'évacuation d'air (260, 261, 262, 500, 600) guidant l'air acheminé par le au moins un dispositif conducteur de chaleur (110, 211, 212, 213) naturel à l'extérieur de l'unité fonctionnelle (100, 200) électrique.

7. Système selon la revendication 6, **caractérisé en ce qu'**au moins l'un des au moins un dispositif d'évacuation d'air (260, 261, 262, 500, 600) comprend au moins un premier chemin d'écoulement (511) et au moins un second chemin d'écoulement (512), le au moins un premier chemin d'écoulement (511) pouvant être fermé par au moins un élément de fermeture (520, 530), et le au moins un second chemin d'écoulement (512) comprenant au moins un élément absorbeur (540) pour l'absorption et l'amortissement de gaz chauds, et le au moins un élément de fermeture (520, 530) fermant le au moins un premier chemin d'écoulement (511) en cas de dépassement d'une valeur seuil prédéfinie et dépendante de la pression.

8. Système selon la revendication 7, **caractérisé en ce que** la valeur seuil dépendante de la pression est prédéfinie de telle sorte que le au moins un élément de fermeture (520, 530) ne ferme pas le au moins un premier chemin d'écoulement (511) lors du fonctionnement normal de l'unité fonctionnelle (100, 200) électrique, et **en ce que**, en cas d'augmentation de pression due à un incident, le au moins un élément de fermeture (520, 530) ferme le au moins un premier chemin d'écoulement (511).

9. Système selon la revendication 1, **caractérisé en ce que** le premier élément conducteur de chaleur (212) est à base d'un matériau diélectrique.

10. Système selon la revendication 1, **caractérisé en ce que** le premier élément conducteur de chaleur (212) présente au moins un contact (235, 236) électrique guidé à la sortie du premier élément conducteur de chaleur (212) pour le raccordement du au moins un élément (120, 220) électrique inclus à l'unité fonctionnelle (100, 200) électrique, et le premier élément conducteur de chaleur (212) comprenant au moins une ouverture d'aspiration (232, 234) se trouvant à proximité d'au moins l'un des au moins un contact (235, 236) électrique.

11. Système selon la revendication 10, **caractérisé en ce qu'**au moins l'une des au moins une ouverture d'aspiration (232, 234) du premier élément conducteur de chaleur (212) est prolongée par un tuyau (231, 233) à proximité d'un élément électrique.

12. Système selon la revendication 11, le tuyau (231, 233) étant à base de matériau diélectrique.

13. Système selon l'une des revendications 1 à 12, **caractérisé en ce que** le second élément conducteur de chaleur (213) est disposé au-dessus du conduit d'arrivée d'air (211) et du premier élément conducteur de chaleur (212).

14. Système selon l'une des revendications 1 à 13, **caractérisé en ce que** le premier élément conducteur de chaleur (212) est conçu sous forme d'élément conducteur de chaleur (212) amovible entre le conduit d'arrivée d'air (211) et le second élément conducteur de chaleur (213).

15. Système selon la revendication 14, **caractérisé en ce que** l'élément conducteur de chaleur (212) amovible est conçu sous forme de module (212) pouvant être introduit et sorti entre le conduit d'arrivée d'air (211) et le second élément conducteur de chaleur (213).

16. Système selon la revendication 15, **caractérisé en ce que** le second élément conducteur de chaleur (213) comprend des moyens pour ajuster le module (212) pouvant être introduit et sorti entre la gaine d'arrivée d'air (211) et le second élément conducteur de chaleur (212).

17. Système selon la revendication 16, **caractérisé en ce que** le second élément conducteur de chaleur (213) est monté de façon flottante et présente une bride (253) en forme de rampe, et le module (212) pouvant être introduit et sorti présentant une bride (252) en forme de rampe pour la liaison avec la bride (253) en forme de rampe du second élément conducteur de chaleur (213).

18. Système selon l'une des revendications 14 à 17, **caractérisé en ce que** l'élément conducteur de chaleur (212) amovible présente au moins un contact (235, 236) électrique guidé à la sortie de l'élément conducteur de chaleur (212) amovible, pour le raccordement du au moins un élément (220) électrique inclus à l'unité fonctionnelle (100, 200) électrique, et le au moins un contact électrique (235, 236) établissant un contact électrique avec l'unité fonctionnelle (100, 200) électrique lorsque l'élément conducteur de chaleur (212) amovible est monté, et ce contact électrique est coupé en cas d'enlèvement de l'élément conducteur de chaleur (212) amovible.

19. Système selon la revendication 18, **caractérisé en ce que** l'élément conducteur de chaleur (212) amovible comprend au moins une ouverture d'aspiration (232, 234) se trouvant à proximité d'au moins l'un des au moins un contact (235, 236) électrique.

20. Système selon la revendication 19, **caractérisé en ce qu'**au moins l'une des au moins une ouverture d'aspiration (232, 234) de l'élément conducteur de chaleur (212) amovible est prolongé par un tuyau (231, 233) à proximité d'au moins l'un des au moins un contact électrique (235, 236).

21. Système selon la revendication 20, **caractérisé en ce qu'**au moins l'un des au moins un contact (235, 236) électrique est guidé par au moins l'un des au moins une ouverture d'aspiration (232, 234) prolongée par un tuyau (231, 233) à la sortie de l'élément conducteur de chaleur (212) amovible.

22. Système selon la revendication 21, **caractérisé en ce que** le tuyau (231, 233) est à base de matériau diélectrique.

23. Système selon l'une des revendications 1 à 22, **caractérisé en ce qu'**au moins l'un des au moins un élément (120, 220) électrique est un onduleur pour la tension moyenne et/ou la haute tension.

24. Système selon l'une des revendications 1 à 23, **caractérisé en ce qu'**au moins l'un des au moins un élément (120, 220) électrique est un transformateur pour la tension moyenne et/ou la haute tension.

25. Système selon l'une des revendications 1 à 24, **caractérisé en ce qu'**au moins l'un des au moins un élément (120, 220) électrique est un interrupteur de puissance pour la tension moyenne et/ou la haute tension.

26. Système selon l'une des revendications 1 à 25, **caractérisé en ce que** l'unité fonctionnelle (100, 200) électrique représente une installation de commutation pour la tension moyenne et/ou la haute tension.

27. Système selon la revendication 26, **caractérisé en ce que** l'installation de commutation est isolée par air.

28. Système selon la revendication 27, **caractérisé en ce que** l'installation de commutation est isolée par gaz.

29. Elément conducteur de chaleur pour un système de ventilation d'une unité fonctionnelle électrique de haute tension et de tension moyenne (120, 220), le système comprenant au moins un conduit d'arrivée d'air (211) raccordé à au moins une ouverture d'arrivée d'air (130, 270), et le système comprenant au moins un second élément conducteur de chaleur (213), au moins un élément (120, 220) électrique étant placé dans l'élément conducteur de chaleur (212) pour le système, et l'élément conducteur de chaleur (212) pouvant être placé entre un premier du au moins un conduit d'arrivée d'air (211) et un premier du au moins un second élément conducteur de chaleur (213), de sorte que le premier du au moins un conduit d'arrivée d'air (211), l'élément conducteur de chaleur (213) placé, et le premier du au moins un second élément conducteur de chaleur (213) forment un dispositif conducteur de chaleur (110, 211, 212, 213) fermé, naturel, agencé à l'intérieur de l'unité fonctionnelle électrique.

30. Dispositif pour un système de ventilation d'une unité fonctionnelle électrique de haute tension et de tension moyenne (100, 200), le dispositif comprenant au moins un conduit d'arrivée d'air (211) raccordé à au moins une ouverture d'arrivée d'air (130, 270), et le dispositif comprenant au moins un élément conducteur de chaleur (213), et au moins un premier du au moins un conduit d'arrivée d'air (211) et au moins un premier du au moins un élément conducteur de chaleur (213) étant conçus de telle sorte qu'un autre élément conducteur de chaleur (212), comprenant au moins un élément (120, 220) électrique, peut être placé entre le premier du au moins un conduit d'arrivée d'air (211) et le premier du au moins un élément conducteur de chaleur (213), de sorte que le premier du au moins un conduit d'arrivée d'air (211), l'autre élément conducteur de chaleur (212) placé et le premier du au moins un élément conducteur de chaleur (213) forment un dispositif conducteur de chaleur (110, 211, 212, 213) fermé, naturel, agencé à l'intérieur de l'unité fonctionnelle (100, 200) électrique.
